Europäisches Patentamt

European Patent Office

Office européen des brevets

(11) Publication number : **0 387 898 B1**

# EUROPEAN PATENT SPECIFICATION

(45) Date of publication of patent specification :
**29.11.95 Bulletin 95/48**

(51) Int. Cl.⁶ : **G11B 7/24, G11B 7/26**

(21) Application number : **90105008.8**

(22) Date of filing : **16.03.90**

(54) **Optical recording medium.**

(30) Priority : **17.03.89 JP 63444/89**
**17.03.89 JP 63445/89**
**17.03.89 JP 63446/89**
**17.03.89 JP 63447/89**
**30.03.89 JP 76637/89**

(43) Date of publication of application :
**19.09.90 Bulletin 90/38**

(45) Publication of the grant of the patent :
**29.11.95 Bulletin 95/48**

(84) Designated Contracting States :
**DE FR GB NL**

(56) References cited :
**EP-A- 0 278 789**
**EP-A- 0 278 790**
**EP-A- 0 286 406**
**EP-A- 0 294 174**
**EP-A- 0 294 273**
**EP-A- 0 294 932**
**EP-A- 0 362 852**
**EP-A- 0 392 179**

(73) Proprietor : **FUJI XEROX CO., LTD.**
**No. 3-5, Akasaka 3-chome**
**Minato-ku Tokyo 107 (JP)**

(72) Inventor : **Ueno, Osamu**
**2274 Hongo**
**Ebina-shi, Kanagawa (JP)**
Inventor : **Kobayashi, Hideo**
**2274 Hongo**
**Ebina-shi, Kanagawa (JP)**
Inventor : **Ueyanagi, Kiichi**
**2274 Hongo**
**Ebina-shi, Kanagawa (JP)**

(74) Representative : **Boeters, Hans Dietrich, Dr. et al**
**Patentanwälte Boeters & Bauer,**
**Bereiteranger 15**
**D-81541 München (DE)**

## Description

## FIELD OF THE INVENTION

This invention relates to a rewritable optical recording medium for recording, reproducing, and erasing information whose optical properties change on irradiation with a condensed light beam, such as a laser beam, to conduct recording, reproduction or erasion of information. More particularly, it relates to an improved optical recording medium with which rewriting of information can be carried out at an increased speed and the recorded information can be maintained stably for an extended period of time.

## BACKGROUND OF THE INVENTION

Known rewritable optical recording media using a laser beam, etc. for recording information include magneto-optical recording media, and some of them have been put into practical use. An magneto-optical recording system comprises inverting magnetism of a recording layer by light energy and a magnetic field to conduct recording and detecting a difference of angle of Faraday rotation or angle of Kerr rotation due to the direction of magnetization to obtain reproduced signals. However, this system finds no practical method for conducting rewriting within one sector so that it has been of limited application.

On the other hand, a so-called phase transition type optical recording medium which utilizes a phase transition between a crystal phase and an amorphous phase has been proposed and receiving studies as another type of rewritable optical recording media. According to this recording system, rewriting within one sector can be carried out by using two light beams (i.e., recorded information is erased by the preceding beam, and recording is then effected with the beam following). When, in particular, a recording material requiring a short time for crystallization is employed, it is possible to conduct overwriting (simultaneous erasing and writing) with one light beam. Thus, the phase transition type recording medium and phase change type recording medium, resp., is of wide application in many fields.

So far proposed recording materials applicable to the phase transition type optical recording media include a binary compound, $Sb_2Te_3$, and a ternary compound, Ge-Sb-Te, as disclosed in JP-A-63-225934 (the term "JP-A" as used herein means an "unexamined published Japanese patent application"). Recording is effected by irradiating a condensed light beam, such as a semi-conductor laser beam, on a recording layer comprising these materials to melt the irradiated part, followed by quenching to form an amorphous phase, while erasing is effected by irradiating the recorded part with a condensed light beam of a power lower than that used for recording to maintain the irradiated area at a crystallizing temperature for a given time to thereby return the amorphous phase to a crystalline phase.

In view of simplification of an optical system or improvement of a rate of transition, a recording material for use in the phase transition type optical recording media preferably has a short crystallizing time. Further, in view of long-term maintenance of recorded information, it is desirable that the recording material exhibits a stable amorphous phase.

In this connection, although the conventional recording material made of $Sb_2Te_3$ has a short crystallizing time, i.e., satisfies the first requirement, it has insufficient stability in its amorphous phase so that the recorded information cannot be maintained for a long time.

On the other hand, Ge-Sb-Te disclosed in JP-A-63-225934 is synthesized by mixing $Sb_2Te_3$ with GeTe which exhibits high stability in its amorphous phase but requires a long time for crystallization. What Ge-Sb-Te aims at is to exhibit properties midway between $Sb_2Te_3$ and GeTe and thus to achieve both an increased rate of transition and improved preservation stability of recorded information. Nevertheless, since mixing of GeTe necessarily makes the crystallizing time longer than that of $Sb_2Te_3$ alone, a sufficient rate of transition cannot be obtained.

EP-A-0 286 406 discloses an optical recording medium wherein the recording phase is composed of a compound of three or more elements. For example, the compound $Bi_4PbTe_7$ can be expressed as $PbTe.(Bi_2Te_3)_2$ which has to be regarded as a stoichiometric compound. Congruent compounds are, however, not disclosed. Further, EP-A-0 294 932 discloses optical recording media wherein the recording layer is composed of Sb, Te, Ge and at least one element selected from Pb, Bi, In, Sn and Tl. The materials forming the recording layer are, however, not congruent compounds so that there was still a need for improving the prior art.

EP-A-0 362 852 is directed to information-recording thin films comprising as the material of the recording film a compound of at least 4 elements including Sb and Te. The materials of the recording film are not congruent compounds. EP-A-0 392 179 discloses an optical recording medium wherein the recording layer essentially consists of at least one element of the group As, Sb, Bi and at least one element of the group consisting of S, Se and Te, contains at least one element of Se and Te and has a composition corresponding to that of a mixture of at least two stoichiometric compounds represented by the chemical formula $Vb_2 VIb_3$, wherein Vb and VIb are an element of the fifth and sixth main group of the periodic table. Both quotations concern, however, not prepublished prior art.

SUMMARY OF THE INVENTION

An object of this invention is to provide a optical recording medium which exhibits stability in its amorphous phase and has a reduced crystallization time to thereby achieve rewriting of information at a high speed and to stably maintain recorded information for a prolonged period of time.

The present invention relates to an optical recording medium comprising a substrate having provided thereon a layer of a recording material whose optical properties reversibly change on application of light or heat, to conduct recording, reproduction, or erasure of information, wherein said recording material is one of:

(i) a recording material having a composition corresponding to a mixture of (i-a) a congruent compound having a composition corresponding to a mixture of (i-a-1) a $IV_b VI_b$ type stoichiometric compound composed of the group $IV_b$ element selected from Sn and Pb and the group $VI_b$ element selected from S, Se, and Te and represented by chemical formula $IV_b VI_b$ and (i-a-2) a $V_{b2} VI_{b3}$ type stoichiometric compound composed of the group $V_b$ element selected from Sb, Bi, and As and the group $VI_b$ element selected from S, Se, and Te and represented by chemical formula $V_{b2} VI_{b3}$ and (i-b) the above-described $V_{b2} VI_{b3}$ type stoichiometric compound, said composition containing at least one of Se and Te,

(ii) a recording material having a composition corresponding to a mixture of (ii-a) a $I_2 VI_b$ type stoichiometric compound composed of the group I element selected from Li, Na, K, Rb, Cs, Cu, Ag, and Au and the group $VI_b$ element selected from S, Se, and Te and represented by chemical formula $I_2 VI_b$ and (ii-b) a stoichiometric compound composed of elements selected from at least two groups of the group $V_b$ consisting of As, Sb, and Bi, and the group $VI_b$ consisting of S, Se, and Te, said composition containing at least one of Se and Te, wherein the crystal phase of said recording material (ii) is a single phase composed of a stoichiometric compound and said stoichiometric compound is a congruent compound;

(iii) a recording material having a composition corresponding to a mixture of (iii-a) a $III_b VI_b$ type stoichiometric compound composed of the group $III_b$ element selected from Ga, In, and $T\ell$ and the group $VI_b$ element selected from S, Se, and Te and represented by chemical formula $III_b VI_b$ and (iii-b) a stoichiometric compound composed of elements selected from at least two groups of the group $III_b$ consisting of Ga, In, and $T\ell$, the group $IV_b$ consisting of Ge, Sn, and Pb, the group $V_b$ consisting of As, Sb, and Bi, and the group $VI_b$ consisting of S, Se, and Te, said composition containing three or more kinds of elements and containing at least one of Se and Te, wherein the crystal phase of said recording material (iii) is a single phase composed of a stoichiometric compound and said stoichiometric compound is a congruent compound;

(iv) a recording material having a composition corresponding to a mixture of (iv-a) a $III_{b2} VI_{b3}$ type stoichiometric compound composed of the group $III_b$ element selected from Ga, In, and $T\ell$ and the group $VI_b$ element selected from S, Se, and Te and represented by chemical formula $III_{b2} VI_{b3}$ and (iv-b) a stoichiometric compound composed of elements selected from at least two groups of the group $III_b$ consisting of Ga, In, and $T\ell$, the group $IV_b$ consisting of Ge, Sn, and Pb, and the group $VI_b$ consisting of S, Se, and Te, said composition containing three or more kinds of elements and containing at least one of Se and Te,

(v-1) a recording material made of a solid solution containing four or more kinds of elements at least one of which is Se or Te and having a crystal structure of a stoichiometric three-element compound having a composition corresponding to a mixture of (v-1-a) a $IV_b VI_b$ type stoichiometric compound composed of the group $IV_b$ element selected from Sn and Pb and the group $VI_b$ element selected from S, Se, and Te and represented by chemical formula $IV_b VI_b$ and (v-1-b) a $V_{b2} VI_{b3}$ type stoichiometric compound composed of the group $V_b$ element selected from Sb, Bi, and As and the group $VI_b$ element selected from S, Se, and Te and represented by chemical formula $V_{b2} VI_{b3}$, in which at least one of the three constituent elements of said stoichiometric three-element compound is partly substituted by at least one element selected from the group consisting of the above-described elements of the groups $IV_b$, $V_b$, and $VI_b$ and Si and Ge of the group $IV_b$,

(v-2) a recording material made of a solid solution containing four or more kinds of elements at least one of which is Se or Te and having a crystal structure of a stoichiometric three-element compound having a composition corresponding to a mixture of (v-2-a) a $I_2 VI_b$ type stoichiometric compound composed of the group I element selected from Li, Na, X, Rb, Cs, Cu, Ag, and Au and the group $VI_b$ element selected from S, Se, and Te and represented by chemical formula $I_2 VI_b$ and (v-2-b) a $V_{b2} VI_{b3}$ type stoichiometric compound composed of the group $V_b$ element selected from As, Sb, and Bi and the group $VI_b$ element selected from S, Se, and Te and represented by chemical formula $V_{b2} VI_{b3}$, in which at least one of the three constituent elements of said stoichiometric three-element compound is partly substituted by at least one element selected from the above-described elements of the groups I, $V_b$, and $VI_b$, (v-3) a recording material made of a solid solution containing four or more kinds of elements at least one of which is Se or Te and having a crystal structure of a stoichiometric three-element compound having a composition corresponding to a mixture of (v-3-a) a $I_2VI_b$ type stoichiometric compound composed of the group I element selected from Li, Na, K, Rb, Cs, Cu, Ag and Au and the group $VI_b$ element selected from S, Se, and Te and represented by chemical formula $I_2VI_b$ and (v-3-b) a $IV_bVI_{b2}$ type stoichiometric compound composed of the group $IV_b$ element selected from Ge, Sn, and Pb and the group $VI_b$ element selected from S, Se, and Te and represented by chemical formula $IV_bVI_{b2}$, in which at least one of the three constituent elements of said three-element compound is partly substituted by at least one element selected from the group consisting of the above-described elements of the groups I, $IV_b$, and $VI_b$ and Si of the group $IV_b$,

(v-4) a recording material made of a solid solution containing four or more kinds of elements at least one of which is Se or Te and having a crystal structure of a stoichiometric three-element compound having a composition corresponding to a mixture of (v-4-a) a $III_bVI_b$ type stoichiometric compound composed of the group $III_b$ element selected from Ga, In, and $T\ell$ and the group $VI_b$ element selected from S, Se, and Te and represented by chemical formula $III_bVI_b$ and (v-4-b) a $IV_bVI_b$ type stoichiometric compound composed of the group $IV_b$ element selected from Ge, Sn, and Pb and the group $VI_b$ element selected from S, Se, and Te and represented by chemical formula $IV_bVI_b$, in which at least one of the three constituent elements of said three-element compound is partly substituted by at least one element selected from the group consisting of the above-described elements of the groups $III_b$, $IV_b$, and $VI_b$, $A\ell$ of the group $III_b$, and Si of the group $IV_b$,

(v-5) a recording material made of a solid solution containing four or more kinds of elements at least one of which is Se or Te and having a crystal structure of a stoichiometric three-element compound having a composition corresponding to a mixture of (v-5-a) a $III_bVI_b$ type stoichiometric compound composed of the group $III_b$ element selected from Ga, In, and $T\ell$ and the group $VI_b$ element selected from S, Se, and Te and represented by chemical formula $III_bVI_b$ and (v-5-b) a $IV_bVI_{b2}$ type stoichiometric compound composed of the group $IV_b$ element selected from Ge, Sn, and Pb and the group $VI_b$ element selected from S, Se, and Te and represented by chemical formula $IV_bVI_{b2}$, in which at least one of the three constituent elements of said three-element compound is partly substituted by at least one element selected from the group consisting of the above-described elements of the groups $III_b$, $IV_b$ and $VI_b$, $A\ell$ of the group $III_b$, and Si of the group $IV_b$,

(v-b) a recording material made of a solid solution containing four or more kinds of elements at least one of which is Se or Te and having a crystal structure of a stoichiometric three-element compound having a composition corresponding to a mixture of two kinds of a $III_bVI_b$ type stoichiometric compound composed of the group $III_b$ element selected from Ga, In, and $T\ell$ and the group $VI_b$ element selected from S, Se, and Te and represented by chemical formula $III_bVI_b$, in which at least one of the three constituent elements of said three-element compound is partly substituted by at least one element selected from the group consisting of the above-described elements of the groups $III_b$ and $VI_b$ and $A\ell$ of the group $III_b$,

(v-7) a recording material made of a solid solution containing four or more kinds of elements at least one of which is Se or Te and having a crystal structure of a stoichiometric three-element compound having a composition corresponding to a mixture of two kinds of a $IIIb_2VI_{b3}$ type stoichiometric compound composed of the group $III_b$ element selected from Ga, In, and $T\ell$ and the group $VI_b$ element selected from S, Se, and Te and represented by chemical formula $III_{b2}VI_{b3}$, in which at least one of the three constituent elements of said three-element compound is partly substituted by at least one element selected from the group consisting of the above-described elements of the groups $III_b$ and $VI_b$ and $A\ell$ of the group $III_b$,

(v-8) a recording material made of a solid solution containing four or more kinds of elements at least one of which is Se or Te and having a crystal structure of a stoichiometric three-element compound having a composition corresponding to a mixture of (v-8-a) a $III_{b2}VI_{b3}$ type stoichiometric compound composed of the group $III_b$ element selected from Ga, In, and $T\ell$ and the group $VI_b$ element selected from S, Se, and Te and represented by chemical formula $III_{b2}VI_{b3}$ and (v-8-b) a $IV_bVI_b$ type stoichiometric compound composed of the group $IV_b$ element selected from Ge, Sn, and Pb and the group $VI_b$ element selected from S, Se, and Te and represented by chemical formula $IV_bVI_b$, in which at least one of the three constituent elements of said three-element compound is partly substituted by at least one element selected from the group consisting of the above-described elements of the groups $III_b$, $IV_b$, and $VI_b$, $A\ell$ of the group $III_b$, and Si of the group $IV_b$, and

(vii) a recording material made of a solid solution composed of at least three elements selected from the group consisting of the group $III_b$ element selected from Ga, In and Tl, the group $IV_b$ element selected from Ge, Sn, and Pb, the group $V_b$ element selected from As, Sb, and Bi, and the group $VI_b$ element selected from S, Se, and Te and containing at least one of Se and Te, said solid solution being synthesized from plural elements or stoichiometric compounds having the same crystal system, wherein said solid solution is a congruent solid solution.

The symbols "I, $III_b$, $IV_b$, $V_b$, and $VI_b$" as used herein mean group numbers of the periodic table. The symbol "I" represents the subgroups $I_a$ and $I_b$. Further, as regards the denomination of the main group elements, reference is made to Encyclopedic Dictionary of Chemistry, page 1080, Tokyo Kagaku Dojin (Publ.), 1989.

## BRIEF DESCRIPTION OF THE DRAWINGS

Figure 1 is a cross-section showing a layer structure of the optical recording medium according to the present invention.

Figures 7 through 9 each illustrate a pseudo-binary phase diagram of the recording material used in Examples 1 to 3, respectively.

Figures 14 through 23 each illustrates a pseudo-binary phase diagram of the recording material used in Examples 4 to 13, respectively.

Figures 24, 25 and 27 through 32 each illustrates a pseudo-binary phase diagram of the stoichiometric three-element compound before substitution used as a recording material in Comparative Example 2 and Examples 16 to 18 and 20 to 23, respectively.

Figures 34 through 41 each illustrates a pseudo-binary phase diagram of the recording material used in Examples 24 to 31, respectively.

## DETAILED DESCRIPTION OF THE INVENTION

### Recording Materials (i):

The $IV_bVI_b$ type stoichiometric compound in recording materials (i) includes SnS, SnSe, SnTe, PbS, PbSe and PbTe. The $V_{b2}VI_{b3}$ type stoichiometric compound includes those composed of the same $V_b$ elements and the same $VI_b$ elements, e.g., $Sb_2S_3$, $Sb_2Se_3$, $Sb_2Te_3$, $Bi_2S_3$, $Bi_2Se_3$, $Bi_2Te_3$, $As_2S_3$, $As_2Se_3$, and $As_2Te_3$; and those containing different $V_b$ elements or different $VI_b$ elements, e.g., $Sb_2SeTe_2$, $Bi_2SeTe_2$, $Bi_2Se_2Te$, and $Bi_2STe_2$ .

Recording materials (i) which have a composition corresponding to a mixture of the $IV_bVI_b$ type stoichiometric compound and the $V_{b2}VI_{b3}$ type stoichiometric compound may be any of materials composed of at least three kinds of elements selected from the group consisting of the group $IV_b$ elements (i.e., Sn and Pb), the group $V_b$ elements (i.e., Sb, Bi, and As), and the group $VI_b$ elements (i.e., S, Se, and Te), containing at least one of Se and Te, and having a composition corresponding to a mixture obtained by mixing the $IV_bVI_b$ type stoichiometric compound and the $V_{b2}VI_{b3}$ type stoichiometric compound at an arbitrary mixing ratio. The mixture preferably contains one of the two stoichiometric compounds in an amount of from 5 to 95 mol% based on the mixture, and the total content of Se and Te in the recording material is preferably not less than 30 atomic% based on the total atoms constituing the recording material. Examples of such a composition include a composition consisting of three elements containing Se and/or Te, a composition consisting of four elements containing Se and/or Te, and compositions consisting of more than four elements (e.g., a five-element composition and a six-element composition).

Specific examples of recording materials of this type are mixtures composed of at least three elements containing Se and/or Te which is obtained by mixing the $IV_bVI_b$ type stoichiometric compound selected from SnS, SnSe, SnTe, PbS, PbSe, PbTe, etc. with the $V_{b2}VI_{b3}$ type stoichiometric compound selected from $Sb_2S_3$, $Sb_2Se_3$, $Sb_2Te_3$, $Bi_2S_3$, $Bi_2Se_3$, $Bi_2Te_3$, $As_2S_3$, $As_2Se_3$, $As_2Te_3$, $Sb_2SeTe_2$, $Bi_2SeTe_2$, $Bi_2Se_2Te$, $Bi_2STe_2$, etc., at an arbitrary mixing ratio; stoichiometric compounds made of these mixtures, e.g., $Sn_2Sb_2Se_5$, $SnBi_2Te_4$, $PbBi_4Se_7$, $PbBi_2Se_4$, and $Pb_3Bi_4Se_9$; congruent compounds made of these mixtures, e.g., $Sn_2Sb_6Se_{11}$, $SnSb_2Te_4$, $Pb_2Sb_6Te_{11}$, and $PbBi_4Te_7$; solid solutions made of these mixtures, composed of at least three elements containing Se and/or Te; and mixtures of the above-described stoichiometric compounds, solid solutions, etc. at an arbitrary ratio. Further included are mixtures of the above-described congruent compound and the $V_{b2}VI_{b3}$ type stoichiometric compound, e.g., $Sb_2S_3$, $Sb_2Se_3$, $Sb_2Te_3$, $Bi_2S_3$, $Bi_2Se_3$, $Bi_2Te_3$, $As_2S_3$, $As_2Se_3$, $As_2Te_3$, $Sb_2SeTe_2$, $Bi_2SeTe_2$, $Bi_2Se_2Te$, and $Bi_2STe_2$, at an arbitrary mixing ratio.

Use of recording material (i) makes it possible to increase stability of the amorphous phase of the recording layer and to reduce the crystallization time of the recording layer.

In addition, there is formed no $IV_bVI_b$ type stoichiometric compound having a high melting point at the time of phase transition between a crystal phase and an amorphous phase.

Reasons, which the inventors believe, for the reduction of the crystallization time of the above-described recording material layer as compared with the conventionally employed Ge-Sb-Te recording material layer are as follows. The $IV_bVI_b$ type stoichiometric compound in recording materials (i) has a melting point as shown in Table 1 below. The "melting point" as herein referred to means a temperature necessary for cutting all the atomic bonds forming the solid phase. With a crystal structure being the same, the melting point is considered to faithfully reflect the interatomic bond strength. Accordingly, as the melting point becomes higher, the crystal phase seems to have a higher interatomic bond strength. Because all the $IV_bVI_b$ type stoichiometric compounds listed in Table 1 have an NaCl type crystal structure, the way of thinking stated above can be applied to these compounds. Although GeTe has a layered structure called a GeTe type or an As type at room temperature, it is transformed to the above-mentioned NaCl type at temperatures of 440°C or higher so that the melting point of GeTe shown in Table 1 is regarded to the one for the NaCl type.

That is, seeing that the $IV_bVI_b$ type stoichiometric compounds in recording materials (i) have higher melting points than the melting point of GeTe, it is believed that the $IV_b$-$VI_b$ interatomic bond strength is higher than the Ge-Te interatomic bond strength in their crystalline phase. Thus, in the recording material having a composition corresponding to a mixture of the $IV_bVI_b$ type stoichiometric compound and the $V_{b2}VI_{b3}$ type stoichiometric compound, the $IV_b$-$VI_b$ interatomic bond strength is strong, and the free energy in its crystal phase is low.

It is therefore assumed that the above-described recording materials show a greater difference in free energy between the crystal phase and the amorphous phase, i.e., a greater transition energy, as compared with the conventional Ge-Sb-Te recording material and, as a result, the crystallization time can be reduced.

On the other hand, the reason why the recording layer comprising recording material (i) exhibits higher stability in its amorphous phase than the conventional $Sb_2Te_3$ recording material is that recording material (i) is a three or more element material having stronger inhibitory effects on atomic movement due to a difference in atomic radius and thus possesses a greater activation energy than two-element materials.

## TABLE 1

| $IV_bVI_b$ Type Compound | Melting Point (°C) |
| --- | --- |
| SnS | 881 |
| SnSe | 860 |
| SnTe | 790 |
| PbS | 1103 |
| PbSe | 1076 |
| PbTe | 917 |
| GeTe | 725 |

Recording Material (ii):

The $I_2VI_b$ type stoichiometric compound in recording material (ii) includes those containing the same group I elements, e.g., $Li_2S$, $Li_2Se$, $Li_2Te$, $Na_2S$, $Na_2Se$, $Na_2Te$, $K_2S$, $K_2Se$, $K_2Te$, $Rb_2S$, $Rb_2Se$, $Rb_2Te$, $Cs_2S$, $Cs_2Se$, $Cs_2Te$, $Cu_2S$, $Cu_2Se$, $Cu_2Te$, $Ag_2S$, $Ag_2Se$, $Ag_2Te$, $Au_2S$, $Au_2Se$, and $Au_2Te$; and those containing different group I elements, e.g., CuAgS, CuAgSe, and CuAgTe.

The multi-element stoichiometric compound is a stoichiometric compound composed of elements selected from at least two groups of the groups $III_b$, $IV_b$, $V_b$, and $VI_b$. Examples of such a multi-element stoichiometric compound include a $V_{b2}VI_{b3}$ type stoichiometric compound composed of the group $V_b$ element selected from As, Sb, and Bi and the group $VI_b$ element selected from S, Se, and Te and represented by chemical formula $V_{b2}VI_{b3}$; a $III_{b2}VI_{b3}$ type stoichiometric compound composed of the group $III_b$ element selected from Ga, In, and Tl and the group $VI_b$ element selected from S, Se, and Te and represented by chemical formula $III_{b2}VI_{b3}$; and a $IV_bVI_{b2}$ type stoichiometric compound composed of the group $IV_b$ element selected from Ge, Sn, and Pb and the group $VI_b$ element selected from S, Se, and Te and represented by chemical formula $IV_bVI_{b2}$.

The $V_{b2}VI_{b3}$ type stoichiometric compound includes those composed of the same group $V_b$ elements and the same group $VI_b$ elements, e.g., $Sb_2S_3$, $Sb_2Se_3$, $Sb_2Te_3$, $Bi_2S_3$, $Bi_2Se_3$, $Bi_2Te_3$, $As_2S_3$, $As_2Se_3$, and $As_2Te_3$; and those containing different group $V_b$ elements or different group $VI_b$ elements, e.g., $Sb_2SeTe_2$, $Bi_2SeTe_2$, $Bi_2Se_2Te$, and $Bi_2STe_2$.

The $III_{b2}VI_{b3}$ type stoichiometric compound includes those containing the same group $III_b$ elements and the same group $VI_b$ elements, e.g., $Ga_2S_3$, $Ga_2Se_3$, $Ga_2Te_3$, $In_2S_3$, $In_2Se_3$, $In_2Te_3$, $T\ell_2S_3$, $T\ell_2Se_3$, and $T\ell_2Te_3$; and those containing different $III_b$ elements or different $VI_b$ elements, e.g., $GaInS_3$ and $In_2STe_2$.

The $IV_bVI_{b2}$ type stoichiometric compound includes $GeS_2$, $GeSe_2$, $SnS_2$, and $SnSe_2$.

Recording material (ii) which has a composition corresponding to a mixture of the $I_2VI_b$ type stoichiometric compound and the multi-element stoichiometric compound may be any of materials composed of at least three elements selected from the group I elements (i.e., Li, Na, K, Rb, Cs, Cu, Ag, and Au), the group $III_b$ elements (i.e., Ga, In, and $T\ell$), the $IV_b$ elements (i.e., Ge, Sn and Pb), the group $V_b$ elements (i.e., As, Sb, and Bi), and the group $VI_b$ elements (i.e., S, Se, and Te), containing at least one of Se and Te, and having a composition corresponding to a mixture obtained by mixing the $I_2VI_b$ type stoichiometric compound with a multi-element stoichiometric compound (e,g., a $V_{b2}VI_{b3}$ type stoichiometric compound, a $III_{b2}VI_{b3}$ type stoichiometric compound, and a $IV_bVI_{b2}$ type stoichiometric compound) at an arbitrary mixing ratio. The mixture preferably contains one of the two stoichiometric compounds in an amount of from 5 to 95 mol% based on the mixture, and the total content of Se and Te in the recording material is preferably not less than 30 atomic% based on the total atoms constituing the recording material. Examples of such a composition include a composition consisting of three elements containing Se and/or Te, a composition consisting of four elements containing Se and/or Te, and compositions consisting of more than four elements (e.g., a five-element composition and a six-element composition).

Specific examples of recording material (ii) are mixtures composed of at least three elements containing Se and/or Te which are obtained by mixing the above-described $I_2VI_b$ type stoichiometric compound with a $V_{b2}VI_{b3}$ type stoichiometric compound selected from $Sb_2S_3$, $Sb_2Se_3$, $Sb_2Te_3$, $Bi_2S_3$, $Bi_2Se_3$, $Bi_2Te_3$, $As_2S_3$, $As_2Se_3$, $As_2Te_3$, $Sb_2SeTe_2$, $Bi_2SeTe_2$, $Bi_2Se_2Te$, $Bi_2STe_2$, etc. at an arbitrary ratio; stoichiometric compounds made of these mixtures, e.g., $Sn_2Sb_2Se_5$, $SnBi_2Te_4$, $PbBi_4Se_7$, $PbBi_2Se_4$, $Pb_3Bi_4Se_9$, etc.; congruent compounds made of these mixtures, e.g., $Sn_2Sb_6Se_{11}$, $SnSb_2Te_4$, $Pb_2Sb_6Te_{11}$, $PbBi_4Te_7$, etc.; solid solutions made of these mixtures, which are composed of at least three elements containing Se and/or Te; and mixtures of the above-described stoichiometric compounds, solid solutions, etc. at an arbitrary ratio.

Further included in recording material (ii) are mixtures composed of at least three elements containing Se and/or Te which are obtained by mixing the above-described $I_2VI_b$ type stoichiometric compound and a $III_{b2}VI_{b3}$ type stoichiometric compound, e.g., $Ga_2S_3$, $Ga_2Se_3$, $Ga_2Te_3$, $In_2S_3$, $In_2Se_3$, $In_2Te_3$, $T\ell_2S_3$, $T\ell_2Se_3$, $T\ell_2Te_3$, $GaInS_3$, $In_2STe_2$, etc. at an arbitrary mixing ratio; stoichiometric compounds made of these mixtures, e.g., $CuGaSe_2$, $CuInSe_2$, $CuInTe_2$, $AgInTe_2$, etc.; congruent compounds made of these mixtures, e.g., $AgGaSe_2$, $AgIn_2Se_8$, etc.; solid solutions made of these mixtures, which are composed of at least three elements containing Se and/or Te; and mixtures of the above-described stoichiometric compounds, solid solutions, etc. at an arbitrary ratio.

Furthermore included in recording material (ii) are mixtures composed of at least three elements containing Se and/or Te which are obtained by mixing the above-described $I_2VI_b$ stoichiometric compound with a $IV_bVI_{b2}$ type stoichiometric compound selected from $GeS_2$, $GeSe_2$, $SnS_2$, $SnSe_2$, etc. at an arbitrary mixing ratio; stoichiometric compounds made of these mixtures, e.g., $Cu_2SnSe_3$; solid solutions made of these mixtures, which are composed of at least three elements containing Se and/or Te; and mixtures of the above-described stoichiometric compounds, solid solutions, etc. at an arbitrary mixing ratio.

Use of recording material (ii) makes it possible to increase stability of the amorphous phase of the recording layer and to reduce the crystallization time of the recording layer.

Reason, which the inventors believe, for the reduction of the crystallization time of the above-described recording material layer as compared with the conventionally employed Ge-Sb-Te recording material layer is as follows.

Electronegativities of elements constituting the conventional recording materials and recording materials (ii) of the invention are shown in Table 2 below. The electronegativities herein referred to are values of Phillips' electronegativity which are obtained by adding the screening effect by valence electrons to the values of Pauling's electronegativity (see J.C. Phillips, Bonds and Bands in Semiconductors, Academic Press, New York and London (1973), with the exception that the values for K, Rb, and Cs are Pauling's electronegativities since Phillips' electronegativities for these elements have not yet been obtained. It is known that ionic character of an interatomic bond tends to increase as a difference in electronegativity between the atoms becomes greater.

The Phillips' electronegativities herein used are calculated values obtained for regular tetrahedral structures. Since the electron orbit in the atoms constituting recording material (ii), inclusive of a non-bonding pair, is regular-tetrahedral, it would be safe to apply the values of Phillips' electronegativity to these atoms.

<p align="center">TABLE 2</p>

| $I_a$ | $I_b$ | $III_b$ | $IV_b$ | $V_b$ | $VI_b$ |
|-------|-------|---------|--------|-------|--------|
| Li<br>1.00 | | | | | |
| Na<br>0.72 | | | | | S<br>1.87 |
| K<br>(0.8)* | Cu<br>0.79 | Ga<br>1.13 | Ge<br>1.35 | As<br>1.57 | Se<br>1.79 |
| Rb<br>(0.8)* | Ag<br>0.57 | In<br>0.99 | Sn<br>1.15 | Sb<br>1.31 | Te<br>1.47 |
| Cs<br>(0.7)* | Au<br>0.64 | Tl<br>0.94 | Pb<br>1.09 | Bi<br>1.24 | |

<p align="center">* Pauling's electronegativities</p>

Interatomic bonds in the conventional Ge-Sb-Te being considered, the Phillips' electronegativity values of Ge, Sb, and Te are 1.35, 1.31, and 1.47, respectively, as shown in Table 2, giving a difference of 0.04 between Ge and Sb, 0.16 between Sb and Te, and 0.12 between Ge and Te. Thus, it can be seen that ionic bond strength of Ge-Sb, Sb-Te and Ge-Te bonds constructing Ge-Sb-Te is weak.

In the $I_2VI_b$ type stoichiometric compound constituting a part of recording material (ii), to the contrary, a difference in electronegativity between Te whose electronegativity is the lowest (1.47) of the group $VI_b$ elements and Li whose electronegativity is the highest (1.00) of the group I elements is 0.47. On the other hand, a difference between S whose electronegativity is the highest (1.87) of the group $VI_b$ elements and Ag whose electronegativity is the lowest (0.57) of the group I elements is 1.30. That is, the electronegativity difference between the group I elements and the group $VI_b$ elements widely ranges from 0.47 to 1.30, indicating strong ionic bond strength between the group I atom and the group $VI_b$ atom.

From these considerations, it is believed that the group I atom-group $VI_b$ atom bond strength is higher than the strength of the interatomic bonds constituting Ge-Sb-Te (most of them are covalent bonds) by the strength corresponding to the above-described ionic bond strength.

Therefore, when the $I_2VI_b$ type stoichiometric compound is mixed with a multi-element stoichiometric compound composed of elements selected from at least two groups of the group $III_b$ (i.e., Ga, In, and Tl), the group $IV_b$ (i.e., Ge, Sn, and Pb), the group $V_b$ (i.e., As, Sb, and Bi), and the $VI_b$ (i.e., S, Se, and Te), the mixture contains a group I atom-group $VI_b$ atom bond having high bond strength and thereby has a reduced free energy in the crystal phase thereof. As a result, a difference in free energy between the crystal phase and the amorphous phase, i.e., a transition energy, increases. This is assumed to be the reason why recording material (ii) has a reduced time of crystallization as compared with the conventional Ge-Sb-Te recording material.

The fact that the conventional $Sb_2Te_3$ recording material has a short crystallization time, though it contains no bond exhibiting strong ionic bond strength, is not opposed to the consideration mentioned above because such a short crystallization time is believed to arise from its small activation energy but not from large transition energy.

On the other hand, the reason, the inventors believe, for the improved stability of recording material (ii) in its amorphous phase as compared with the conventional Ge-Sb-Te or $Sb_2Te_3$ recording material is as follows.

As discussed above, Ge-Sb-Te has weak character of ionic bond and strong character of covalent bond. Therefore, according as the number of elements increases, the amorphous phase easily becomes unstable due to an increase of free energy with the increasing strain. To the contrary, since recording material (ii) has strong character of ionic bond which is less limited by bond direction or bond distance, it is stabilized in spite of a somewhat strained structure and thus exhibits higher stability in its amorphous phase than Ge-Sb-Te.

<p align="center">8</p>

Further, since recording material (ii) is a multi-element material composed of three or more elements, the inhibitory effect on atomic movement due to differences in atomic radius is greater, and the activation energy is so greater than the two-element material $Sb_2Te_3$. The high stability of recording material (ii) in its amorphous phase would also be explained from this point of view.

Recording Materials (iii) and (iv):

The $III_bVI_b$ type stoichiometric compound in recording material (iii) includes GaS, GaSe, GaTe, InS, InSe, InTe, $T\ell S$, $T\ell Se$, $T\ell Te$, $GaInS_2$, $GaInSe_2$, $Ga_2InSe_3$, $Ga_2SeTe$, $Ga_3Se_2Te$, $GaT\ell Se_2$, and $InT\ell Se_2$.

The multi-element stoichiometric compound in recording material (iii) includes stoichiometric compounds composed of elements arbitrarily selected from at least two groups of the groups $III_b$, $IV_b$, $V_b$, and $VI_b$. Examples of such multi-element stoichiometric compounds are $IV_bVI_b$ type stoichiometric compounds composed of the group $IV_b$ element selected from Ge, Sn, and Pb and the group $VI_b$ element selected from S, Se, and Te and represented by chemical formula $IV_bVI_b$; $IV_bVI_{b2}$ type stoichiometric compounds composed of the group $IV_b$ element selected from Ge, Sn, and Pb and the group $VI_b$ element selected from S, Se, and Te and represented by chemical formula $IV_bVI_{b2}$; and $III_bVI_b$ type stoichiometric compounds composed of the group $III_b$ element selected from Ga, In, and $T\ell$ and the group $VI_b$ element selected from S, Se, and Te and represented by chemical formula $III_bVI_b$.

Specific examples of the $IV_bVI_b$ type stoichiometric compounds are GeS, GeSe, GeTe, SnS, SnSe, SnTe, PbS, PbSe, PbTe, $GeSnTe_2$, and $Ge_2SeTe$.

Specific examples of the $IV_bVI_{b2}$ type stoichiometric compounds are $GeS_2$, $GeSe_2$, $SnS_2$, $SnSe_2$, and $SnTe_2$.

Specific examples of the $III_bVI_b$ type stoichiometric compounds are the same as above enumerated, i.e., GaS, GaSe, GaTe, InS, InSe, InTe, $T\ell S$, $T\ell Se$, $T\ell Te$, $GaInS_2$, $GaInSe_2$, $Ga_2InSe_3$, $Ga_2SeTe$, $Ga_3Se_2Te$, $GaT\ell Se_2$, and $InT\ell Se_2$.

Recording material (iii) which has a composition corresponding to a mixture of the $III_bVI_b$ type stoichiometric compound and the multi-element stoichiometric compound may be any of materials composed of at least three elements selected from the group $III_b$ elements (i.e., Ga, In, and $T\ell$), the $IV_b$ elements (i.e., Ge, Sn and Pb), the group $V_b$ elements (i.e., As, Sb, and Bi), and the group $VI_b$ elements (i.e., S, Se, and Te), containing at least one of Se and Te, and having a composition corresponding to a mixture obtained by mixing the $III_bVI_b$ type stoichiometric compound with a multi-element stoichiometric compound (e,g., a $IV_bVI_b$ type stoichiometric compound, a $IV_bVI_{b2}$ type stoichiometric compound, and a $III_bVI_b$ type stoichiometric compound) at an arbitrary mixing ratio. The mixture preferably contains one of the two stoichiometric compounds in an amount of from 5 to 95 mol% based on the mixture, and the total content of Se and Te in the recording material is preferably not less than 30 atomic% based on the total atoms constituing the recording material. Examples of such a composition include a composition consisting of three elements containing Se and/or Te, a composition consisting of four elements containing Se and/or Te, and compositions consisting of more than four elements (e.g., a five-element composition and a six-element composition).

Specific examples of recording material (iii) are mixtures composed of at least three elements containing Se and/or Te which are obtained by mixing the above-described $III_bVI_b$ type stoichiometric compound with a $IV_bVI_b$ type stoichiometric compound selected from GeS, GeSe, GeTe, SnS, SnSe, SnTe, PbS, PbSe, PbTe, $GeSnTe_2$, $Ge_2SeTe$, etc. at an arbitrary ratio; stoichiometric compounds made of these mixtures, e.g., $Ga_2GeTe_3$, $In_2GeTe_3$, $In_3SnTe_4$, $InPbTe_2$, $T\ell GeTe_2$, and $T\ell_2GeTe_3$; congruent compounds made of these mixtures, e.g., $GaGeTe_2$ and $InGeTe_2$; solid solutions made of these mixtures, which are composed of at least three elements containing Se and/or Te; and mixtures of the above-described stoichiometric compounds, solid solutions, etc. at an arbitrary ratio.

Further included in recording material (iii) are mixtures composed of at least three elements containing Se and/or Te which are obtained by mixing the above-described $III_bVI_b$ type stoichiometric compound and a $IV_bVI_{b2}$ type stoichiometric compound, e.g., $GeS_2$, $GeSe_2$, $SnS_2$, $SnSe_2$, and $SnTe_2$, at an arbitrary mixing ratio; stoichiometric compounds made of these mixtures, e.g., $GaGeSe_3$; solid solutions made of these mixtures, which are composed of at least three elements containing Se and/or Te; and mixtures of the above-described stoichiometric compounds, solid solutions, etc. at an arbitrary ratio.

Furthermore included in recording material (iii) are mixtures composed of at least three elements containing Se and/or Te which are obtained by mixing the above-described $III_bVI_b$ stoichiometric compound with a $III_bVI_b$ type stoichiometric compound, e.g., GaS, GaSe, GaTe, InS, InSe, InTe, $T\ell S$, $T\ell Se$, $T\ell Te$, $GaInS_2$, $GaInSe_2$, $Ga_2InSe_3$, $Ga_2SeTe$, $Ga_3Se_2Te$, $GaT\ell Se_2$, and $InT\ell Se_2$, at an arbitrary mixing ratio; stoichiometric compounds made of these mixtures, e.g., $GaInSe_2$, $Ga_2InSe_3$, and $Ga_3SeTe_2$; congruent compounds made of these mixtures, e.g., $GaT\ell Se_2$, $InT\ell Se_2$, and $Ga_2SeTe$; solid solutions made of these mixtures, which are composed of at least three elements containing Se and/or Te; and mixtures of the above-described stoichiometric compounds, solid solutions, etc. at an arbitrary mixing ratio.

In recording material (iv), the $III_{b2}VI_{b3}$ type stoichiometric compound includes those containing the same $III_b$ elements and the same $VI_b$ elements, e.g., $Ga_2S_3$, $Ga_2Se_3$, $Ga_2Te_3$, $In_2S_3$, $In_2Se_3$ $In_2Te_3$, $Tl_2S_3$, $Tl_2Se_3$, and $Tl_2Te_3$, and those containing different $III_b$ elements or different $VI_b$ elements, e.g., $In_2STe_2$.

The multi-element stoichiometric compound in recording material (iv) is a stoichiometric compound composed of elements selected from at least two groups of the groups $III_b$, $IV_b$, and $VI_b$, including $III_{b2}VI_{b3}$ type stoichiometric compounds composed of the group $III_b$ element selected from Ga, In, and $Tl$ and the group $VI_b$ element selected from S, Se, and Te and represented by chemical formula $III_{b2}VI_{b3}$; and $IV_bVI_b$ type stoichiometric compounds composed of the group $IV_b$ element selected from Ge, Sn, and Pb and the group $VI_b$ element selected from S, Se, and Te and represented by chemical formula $IV_bVI_b$.

Specific examples of the $III_{b2}VI_{b3}$ stoichiometric compounds are the same as enumerated above, i.e., $Ga_2S_3$, $Ga_2Se_3$, $Ga_2Te_3$, $In_2S_3$, $In_2Se_3$ $In_2Te_3$, $Tl_2S_3$, $Tl_2Se_3$, and $In_2STe_2$.

Specific examples of the $IV_bVI_b$ type stoichiometric compounds are the same as enumerated above, i.e., GeS, GeSe, GeTe, SnS, SnSe, SnTe, PbS, PbSe, PbTe, $GeSnTe_2$, and $Ge_2SeTe$.

Recording material (iv) which has a composition corresponding to a mixture of the above-described $III_{b2}VI_{b3}$ type stoichiometric compound and the multi-element stoichiometric compound may be any of materials composed of at least three elements selected from the group $III_b$ elements (i.e., Ga, In, and $Tl$), the group $IV_b$ elements (i.e., Ge, Sn and Pb), and the group $VI_b$ elements (i.e., S, Se, and Te), containing at least one of Se and Te, and having a composition corresponding to a mixture obtained by mixing the $III_{b2}VI_{b3}$ type stoichiometric compound with a multi-element stoichiometric compound (e.g., a $III_{b2}VI_{b3}$ type stoichiometric compound and a $IV_bVI_b$ type stoichiometric compound) at an arbitrary mixing ratio. The mixture preferably contains one of the two stoichiometric compounds in an amount of from 5 to 95 mol% based on the mixture, and the total content of Se and Te in the recording material is preferably not less than 30 atomic% based on the total atoms constituing the recording material. Examples of such a composition include a composition consisting of three elements containing Se and/or Te, a composition consisting of four elements containing Se and/or Te, and compositions consisting of more than four elements (e.g., a five-element composition and a six-element composition).

Specific examples of recording material (iv) are mixtures composed of at least three elements containing Se and/or Te which are obtained by mixing the above-described $III_{b2}VI_{b3}$ type stoichiometric compounds, e.g., $Ga_2S_3$, $Ga_2Se_3$, $Ga_2Te_3$, $In_2S_3$, $In_2Se_3$ $In_2Te_3$, $Tl_2S_3$, $Tl_2Se_3$, $Tl_2Te_3$, and $In_2STe_2$, at an arbitrary ratio; congruent compounds made of these mixtures, e.g., $In_2STe_2$; solid solutions made of these mixtures, which are composed of at least three elements containing Se and/or Te; and mixtures of the above-described congruent compounds, solid solutions, etc. at an arbitrary ratio.

Further included in recording material (iv) are mixtures composed of at least three elements containing Se and/or Te which are obtained by mixing the above-described $III_{b2}VI_{b3}$ type stoichiometric compound and a $IV_bVI_b$ type stoichiometric compound, e.g., GeS, GeSe, GeTe, SnS, SnSe, SnTe, PbS, PbSe, PbTe, $GeSnTe_2$, and $Ge_2SeTe$, at an arbitrary mixing ratio; stoichiometric compounds made of these mixtures, e.g., $Ga_4SnTe_7$; solid solutions made of these mixtures, which are composed of at least three elements containing Se and/or Te; and mixtures of the above-described stoichiometric compounds, solid solutions, etc. at an arbitrary ratio.

Use of recording material (iii) or (iv) makes it possible to increase stability of the amorphous phase of the recording layer and to reduce the crystallization time of the recording layer.

The reason for the reduction of the crystallization time of the above-described recording material layer as compared with the conventionally employed Ge-Sb-Te recording material layer is believed to be the same as set forth above with respect to recording material (ii). More specifically, in the $III_bVI_b$ type stoichiometric compounds constituting a part of recording material (iii) and the $III_{b2}VI_{b3}$ type stoichiometric compounds constituting a part of recording material (iv), a difference in electronegativity between Te whose electronegativity is the lowest (1.47) of the group $VI_b$ elements and Ga whose electronegativity is the highest (1.13) of the group $III_b$ elements is 0.34. On the other hand, a difference between S whose electronegativity is the highest (1.87) of the group $VI_b$ elements and $Tl$ whose electronegativity is the lowest (0.94) of the group $III_b$ elements is 0.93. That is, the electronegativity difference between the group $III_b$ elements and the group $VI_b$ elements widely ranges from 0.34 to 0.93, indicating strong ionic bond strength between the group $III_b$ atom and the group $VI_b$ atom.

From these considerations, it is believed that the group $III_b$ atom-group $VI_b$ atom bond strength is higher than the strength of the interatomic bonds constituting Ge-Sb-Te (most of them are covalent bonds) by the strength corresponding to the ionic bond strength.

Therefore, when the $III_bVI_b$ type stoichiometric compound is mixed with a multi-element stoichiometric compound composed of elements selected from at least two groups of the group $III_b$ (i.e., Ga, In, and $Tl$), the

group $IV_b$ (i.e., Ge, Sn, and Pb), the group $V_b$ (i.e., As, Sb, and Bi), and the $VI_b$ (i.e., S, Se, and Te), or when the $III_{b2}VI_{b3}$ type stoichiometric compound is mixed with a multi-element stoichiometric compound composed of elements selected from at least two groups of the group $III_b$ (i.e., Ga, In, and $T\ell$), the group $IV_b$ (i.e., Ge, Sn, and Pb), and the group $VI_b$ (i.e., S, Se, and Te), the resulting mixture contains a group $III_b$ atom-group $VI_b$ atom having high bond strength. As a result, the mixture has reduced free energy in its crystal phase as compared with Ge-Sb-Te and thereby has a greater difference in free energy between the crystal phase and the amorphous phase, i.e., a greater transition energy. This seems to be the reason why recording materials (iii) and (iv) have a reduced time of crystallization as compared with the conventional Ge-Sb-Te recording material.

It is considered that the higher stability of the amorphous phase of recording materials (iii) and (iv) as compared with Ge-Sb-Te can also be accounted for by the reason stated above with respect to recording material (ii).

Recording Materials (v-1) to (v-8):

Recording materials (v-1) to (v-8) achieve further improvement in stability in the amorphous phase while having a rate of crystallization equal to that of the above-described recording materials (i) to (iv).

In recording material (v-1), the $IV_bVI_b$ type stoichiometric compound includes SnS, SnSe, SnTe, PbS, PbSe, and PbTe, and the $V_{b2}VI_{b3}$ type stoichiometric compound includes $Sb_2S_3$, $Sb_2Se_3$, $Sb_2Te_3$, $Bi_2S_3$, $Bi_2Se_3$, $Bi_2Te_3$, $As_2S_3$, $As_2Se_3$, and $As_2Te_3$.

The stoichiometric three-element compound having a composition corresponding to a mixture of the $IV_bVI_b$ type stoichiometric compound and the $V_{b2}VI_{b3}$ type stoichiometric compound may be any of stoichiometric three-element compounds consisting of three elements selected from the $IV_b$ elements (i.e., Sn and Pb), the group $V_b$ elements (i.e., Sb, Bi, and As), and the group $VI_b$ elements (i.e., S, Se, and Te), containing at least one of Se and Te, and having a composition corresponding to a mixture of the $IV_bVI_b$ type stoichiometric compound and the $V_{b2}VI_{b3}$ type stoichiometric compound. The mixture preferably contains one of the two stoichiometric compounds in an amount of from 5 to 95 mol% based on the mixture. Specific examples of such stoichiometric three-element compounds are $Sn_2Sb_2Se_5$, $Sn_2Sb_6Se_{11}$, $SnSb_2Te_4$, $Pb_2Sb_6Te_{11}$, $SnBi_2Te_4$, $PbBi_4Se_7$, $PbBi_2Se_4$, $Pb_3Bi_4Se_9$, and $PbBi_4Te_7$.

In recording material (v-1), at least one of the constituent elements of the above-described stoichiometric three-element compound is partly substituted by at least one of other elements selected from elements of the above-enumerated groups and Si and Ge belonging to the group $IV_b$ (i.e., the group $IV_b$ element selected from Sn, Pb, Si, and Ge, the group $V_b$ element selected from Sb, Bi, and As, and the group $VI_b$ element selected from S, Se and Te) to thereby form a solid solution containing 4 or more kinds of elements and containing at least one of Se and Te.

The upper limit of the degree of substitution of the three elements constituting the stoichiometric three-element compound is the degree where the composition containing 4 or more kinds of elements resulted from the substitution no longer constitutes a solid solution possessing the crystal structure of the stoichiometric three-element compound. As long as the degree of substitution is below such a limit, the constituent element(s) may be substituted by other element(s) to an arbitrary extent. Where one constituent element is partly substituted by one other element, there is produced a four-element solid solution; and where it is partly substituted by two other elements, there is produced a five-element solid solution. Where each of two constituent elements is partly substituted by one other element, respectively, there is obtained a five-element solid solution. Where each of three constituent elements is partly substituted by one other element, respectively, there is obtained a six-element solid solution.

In the cases where the constituent element to be substituted and the other element substituting for the constituent element are in the relationship that they can form a solid solution regardless the mixing ratio of the former element to the latter element (hereafter, referred to as a "full-range solid solution"), the strain of crystal structure attended by the substitution is relatively small so that structural changes of the stoichiometric three-element compound due to the substitution can be minimized. Therefore, a permissible degree of substitution can be broadened to advantage. Examples of combinations of elements having such a relationship are a combination of Ge and Si (the group $IV_b$ elements), a combination of Sb and Bi (the group $V_b$ elements), and a combination of Se and Te (the group $VI_b$ elements).

The terminology "crystal structure of a stoichiometric three-element compound" as used herein means a structure of a certain stoichiometric three-element compound specified by atomic arrangement in a crystal lattice characteristic of the stoichiometric three-element compound. The terminology "solid solution possessing a crystal structure of a stoichiometric three-element compound" as used herein means a solid solution in which a part of atoms on lattice points of a crystal lattice characteristic of the stoichiometric three-element compound is substituted by a different atom(s) at random in such a manner that the different atom may be regarded as being uniformly dissolved in the crystal lattice.

Recording materials (v-2) to (v-3) correspond to improved recording material (ii).

In recording material (v-2), the $I_2VI_b$ type stoichiometric compound includes $Li_2S$, $Li_2Se$, $Li_2Te$, $Na_2S$, $Na_2Se$, $Na_2Te$, $K_2S$, $K_2Se$, $K_2Te$, $Rb_2S$, $Rb_2Se$, $Rb_2Te$, $Cs_2S$, $Cs_2Se$, $Cs_2Te$, $Cu_2S$, $Cu_2Se$, $Cu_2Te$, $Ag_2S$, $Ag_2Se$, $Ag_2Te$, $Au_2S$, $Au_2Se$, and $Au_2Te$. The $V_{b2}VI_{b3}$ type stoichiometric compound includes $Sb_2S_3$, $Sb_2Se_3$, $Sb_2Te_3$, $Bi_2S_3$, $Bi_2Se_3$, $Bi_2Te_3$, $As_2S_3$, $As_2Se_3$, and $As_2Te_3$.

The stoichiometric three-element compound which has a composition corresponding to a mixture of the $I_2VI_b$ type stoichiometric compound and the $V_{b2}VI_{b3}$ type stoichiometric compound may be any of stoichiometric three-element compounds consisting of three elements selected from the group I elements (i.e., Li, Na, K, Rb, Cs, Cu, Ag, and Au), the group $V_b$ elements (i.e., As, Sb, and Bi), and the group $VI_b$ elements (i.e., S, Se, and Te), containing at least one of Se and Te, and having a composition corresponding to a mixture obtained by mixing the $I_2VI_b$ type stoichiometric compound with the $V_{b2}VI_{b3}$ type stoichiometric compound. The mixture preferably contains one of the two stoichiometric compounds in an amount of from 5 to 95 mol% based on the mixture. Examples of such stoichiometric three-element compounds are $Sn_2Sb_2Se_5$, $Sn_2Sb_6Se_{11}$, $SnSb_2Te_4$, $Pb_2Sb_6Te_{11}$, $SnBi_2Te_4$, $PbBi_4Se_7$, $PbBi_2Se_4$, $Pb_3Bi_4Se_9$, and $PbBi_4Te_7$.

Recording material (v-2) is characterized by comprising a solid solution containing 4 or more kinds of elements, obtained by partly substituting at least one of the constituent elements of the above-described stoichiometric three-element compound by at least one of other elements selected from elements of the above-enumerated groups, i.e., the group I element selected from Li, Na, K, Rb, Cs, Cu, Ag, and Au, the group $V_b$ element selected from As, Sb, and Bi, and the group $VI_b$ element selected from S, Se, and Te.

In recording material (v-3), examples of the $I_2VI_b$ type stoichiometric compound are the same as those mentioned for recording material (v-2). Examples of the $IV_bVI_{b2}$ type stoichiometric compound are $GeS_2$, $GeSe2_2$, $SnS_2$, and $SnSe_2$.

The stoichiometric three-element compound which has a composition corresponding to a mixture of the $I_2VI_b$ type stoichiometric compound and the $IV_bVI_{b2}$ type stoichiometric compound may be any of stoichiometric compounds consisting of three elements selected from the group I elements including Li, Na, K, Rb, Cs, Cu, Ag, and Au, the group $IV_b$ elements including Ge, Sn, and Pb, and the group $VI_b$ elements including S, Se, and Te, containing at least one of Se and Te, and having a composition corresponding to a mixture obtained by mixing the $I_2VI_b$ type stoichiometric compound with the $IV_bVI_{b2}$ type stoichiometric compound. The mixture preferably contains one of the two stoichiometric compounds in an amount of from 5 to 95 mol% based on the mixture. Examples of such stoichiometric three-element compounds include $Cu_2SnSe_3$.

Recording material (v-3) is characterized by comprising a solid solution containing 4 or more kinds of elements, obtained by partly substituting at least one of the constituent elements of the above-described stoichiometric three-element compound by at least one of other elements selected from the group consisting of elements of the above-enumerated groups and Si belonging to the group $IV_b$, i.e., the group I element selected from Li, Na, K, Rb, Cs, Cu, Ag, and Au, the group $IV_b$ element selected from Si, Ge, Sn, and Pb, and the group $VI_b$ element selected from S, Se, and Te.

Recording materials (v-4), (v-5), and (v-6) correspond to improved recording material (iii).

In recording material (v-4), the $III_bVI_b$ type stoichiometric compound includes GaS, GaSe, GaTe, InS, InSe, InTe, $T\ell S$, $T\ell Se$, and $T\ell Te$. The $IV_bVI_b$ type stoichiometric compound includes GeS, GeSe, GeTe, SnS, SnSe, SnTe, PbS, PbSe, and PbTe.

The stoichiometric three-element compound which has a composition corresponding to a mixture of the $III_bVI_b$ type stoichiometric compound and the $IV_bVI_b$ type stoichiometric compound may be any of stoichiometric compounds consisting of three elements selected from the group $III_b$ elements including Ga, In, and $T\ell$, the group $IV_b$ elements including Ge, Sn, and Pb, and the group $VI_b$ elements including S, Se, and Te, containing at least one of Se and Te, and having a composition corresponding to a mixture obtained by mixing the $III_bVI_b$ type stoichiometric compound with the $IV_bVI_b$ type stoichiometric compound. The mixture preferably contains one of the two stoichiometric compounds in an amount of from 5 to 95 mol% based on the mixture. Examples of such stoichiometric three-element compounds are $Ga_2GeTe_3$, $GaGeTe_2$, $In_2GeTe_3$, $In_3SnTe_4$, $InPbTe_2$, $InGeTe_2$, $T\ell GeTe_2$, and $T\ell_2GeTe_3$.

Recording material (v-4) is characterized by comprising a solid solution containing 4 or more kinds of elements, obtained by partly substituting at least one of the constituent elements of the above-described stoichiometric three-element compound by at least one of other elements selected from the group consisting of the above-enumerated elements, Al belonging to the group $III_b$, and Si belonging to the group $IV_b$, i.e., the group $III_b$ element selected from $A\ell$, Ga, In, and $T\ell$, the group $IV_b$ element selected from Si, Ge, Sn, and Pb, and the group $VI_b$ element selected from S, Se, and Te.

In recording material (v-5), examples of the $III_bVI_b$ type stoichiometric compound are the same as those enumerated with respect to recording material (v-4), and examples of the $IV_bVI_{b2}$ type stoichiometric compound

are $GeS_2$, $GeSe_2$, $SnS_2$, $SnSe_2$, and $SnTe_2$.

The stoichiometric three-element compound which has a composition corresponding to a mixture of the $III_bVI_b$ type stoichiometric compound and the $IV_bVI_{b2}$ type stoichiometric compound may be any of stoichiometric compounds consisting of three elements selected from the group $III_b$ elements including Ga, In, and $T\ell$, the group $IV_b$ elements including Ge, Sn, and Pb, and the group $VI_b$ elements including S, Se, and Te, containing at least one of Se and Te, and having a composition corresponding to a mixture obtained by mixing the $III_bVI_b$ type stoichiometric compound with the $IV_bVI_{b2}$ type stoichiometric compound. The mixture preferably contains one of the two stoichiometric compounds in an amount of from 5 to 95 mol% based on the mixture. Examples of such stoichiometric three-element compounds are $GaGeSe_3$.

Recording material (v-5) is characterized by comprising a solid solution containing 4 or more kinds of elements, obtained by partly substituting at least one of the constituent elements of the above-described stoichiometric three-element compound by at least one of other elements selected from the group consisting of the above-enumerated elements, $A\ell$ belonging to the group $III_b$, and Si belonging to the group $IV_b$, i.e., the group $III_b$ element selected from $A\ell$, Ga, In, and $T\ell$, the group $IV_b$ element selected from Si, Ge, Sn, and Pb, and the group $VI_b$ element selected from S, Se, and Te.

In recording material (v-6), examples of the $III_bVI_b$ type stoichiometric compound are the same as those enumerated with respect to recording material (v-4).

The stoichiometric three-element compound which has a composition corresponding to a mixture of two $III_bVI_b$ type stoichiometric compounds may be any of stoichiometric compounds consisting of three elements selected from the group $III_b$ elements including Ga, In, and $T\ell$ and the group $VI_b$ elements including S, Se, and Te, containing at least one of Se and Te, and having a composition corresponding to a mixture obtained by mixing two $III_bVI_b$ type stoichiometric compounds. The mixture preferably contains one of the two stoichiometric compounds in an amount of from 5 to 95 mol% based on the mixture. Examples of such stoichiometric three-element compounds are $GaInSe_2$, $Ga_2InSe_3$, $Ga_3SeTe_2$, $Ga_2SeTe$, $GaT\ell Se_2$, and $InT\ell Se_2$.

Recording material (v-6) is characterized by comprising a solid solution containing 4 or more kinds of elements, obtained by partly substituting at least one of the constituent elements of the above-described stoichiometric three-element compound by at least one of other elements selected from the group consisting of the above-enumerated elements and $A\ell$ belonging to the group $III_b$, i.e., the group $III_b$ element selected from $A\ell$, Ga, In, and $T\ell$ and the group $VI_b$ element selected from S, Se, and Te.

Recording materials (v-7), (v-6), and (v-8) corresponde to improved recording material (iv).

In recording material (v-7), the $III_{b2}VI_{b3}$ type stoichiometric compound includes $Ga_2S_3$, $Ga_2Se_3$, $Ga_2Te_3$, $In_2S_3$, $In_2Se_3$, $In_2Te_3$, $T\ell_2S_3$, $T\ell_2Se_3$, and $T\ell_2Te_3$.

The stoichiometric three-element compound which has a composition corresponding to a mixture of two $III_{b2}VI_{b3}$ type stoichiometric compounds may be any of stoichiometric compounds consisting of three elements selected from the group $III_b$ elements including Ga, In, and $T\ell$, and the group $VI_b$ elements including S, Se, and Te, containing at least one of Se and Te, and having a composition corresponding to a mixture obtained by mixing two $III_{b2}VI_{b3}$ type stoichiometric compounds. The mixture preferably contains one of the two stoichiometric compounds in an amount of from 5 to 95 mol% based on the mixture. Examples of such stoichiometric three-element compounds include $In_2STe_2$.

Recording material (v-7) is characterized by comprising a solid solution containing 4 or more kinds of elements, obtained by partly substituting at least one of the constituent elements of the above-described stoichiometric three-element compound by at least one of other elements selected from the group consisting of the above-enumerated elements and Al belonging to the group $III_b$, i.e., the group $III_b$ element selected from $A\ell$, Ga, In, and $T\ell$ and the group $VI_b$ element selected from S, Se, and Te.

In recording material (v-8), examples of the $III_{b2}VI_{b3}$ type stoichiometric compound are the same as those enumerated with respect to recording material (v-7), and examples of the $IV_bVI_b$ type stoichiometric compound are GeS, SeSe, SeTe, SnS, SnSe, SnTe, PbS, PbSe, and PbTe.

The stoichiometric three-element compound which has a composition corresponding to a mixture of the $III_{b2}VI_{b3}$ type stoichiometric compound and the $IV_bVI_b$ type stoichiometric compound may be any of stoichiometric compounds consisting of three elements selected from the group $III_b$ element selected from Ga, In, and $T\ell$, the group $IV_b$ element selected from Ge, Sn, and Pb, and the group $VI_b$ element selected from S, Se, and Te, containing at least one of Se and Te, and having a composition corresponding to a mixture obtained by mixing the $III_{b2}VI_{b3}$ type stoichiometric compound with the $IV_bVI_b$ type stoichiometric compound. The mixture preferably contains one of the two stoichiometric compounds in an amount of from 5 to 95 mol% based on the mixture. Examples of such stoichiometric three-element compounds include $Ga_4SnTe_7$.

Recording material (v-8) is characterized by comprising a solid solution containing 4 or more kinds of elements, obtained by partly substituting at least one of the constituent elements of the above-described stoichiometric ternary compound by at least one of other elements selected from the group consisting of the above-

enumerated elements, A$\ell$ belonging to the group III$_b$, and Si belonging to the group IV$_b$, i.e., the group III$_b$ element selected from A$\ell$, Ga, In, and T$\ell$, the group IV$_b$ elemen selected from Si, Ge, Sn, and Pb, and the group VI$_b$ element selected from S, Se, and Te.

In recording materials (v-2) to (v-8), the upper limit of the degree of substitution of the three elements constituting the stoichiometric three-element compound is the degree where the composition containing 4 or more kinds of elements resulted from the substitution no longer constitutes a solid solution possessing the crystal structure of the stoichiometric three-element compound. As long as the degree of substitution is below such a limit, the constituent element(s) may be substituted by other element(s) to an arbitrary extent.

In the cases where the constituent element to be substituted and the other element substituting for the constituent element those capable of forming a full-range solid solution, the strain of crystal structure attended by the substitution is relatively small so that structural changes of the stoichiometric three-element compound due to the substitution can be minimized. Therefore, a permissible degree of substitution can be broadened to advantage similarly to the case of recording material (v-1).

To assure an increased rate of crystallization, it is advantageous to use T$\ell$ as the "other element" which substitutes for a part of the constituent elements of the stoichiometric three-element compound.

In recording materials (v-1) to (v-8), the degree of substitution of the three elements constituting the stoichiometric three-element compounds is preferably not less than 0.5% of the element(s) a part of which is or are substituted, and the total content of Se and Te in recording material is preferably not less than 30 atomic% based on the total atoms constituting the recording mateiral.

As mentioned above, since the recording material layer using each of recording materials (v-1) to (v-8) has a crystal structure of a stoichiometric three-element compound, it has an increased rate of crystallization and exhibits improved stability in its amorphous phase. Further, being comprised of a solid solution in which at least one of the three elements constituting the stoichiometric three-element compound is partly substituted with other element(s), the recording layer exhibits further enhanced stability in the amorphous phase.

The increased rate of crystallization obtained by using recording material (v-1) seems to be based on the same reason as described with respect to recording material (i) ; and that obtained by using recording materials (v-2) to (v-9) is believed to be based on the same reason as described with respect to recording material (ii).

More specifically, in the I$_2$VI$_b$ type stoichiometric compounds constituting a part of recording materials (v-2) to (v-3), a difference in electronegativity between Te whose electronegativity is the lowest (1.47) of the group VI$_b$ elements and Li whose electronegativity is the highest (1.00) of the group I elements is 0.47. On the other hand, a difference between S whose electronegativity is the highest (1.87) of the group VI$_b$ elements and Ag whose electronegativity is the lowest (0.57) of the group I elements is 1.30. That is, the electronegativity difference between the group I element and the group VI$_b$ element widely ranges from 0.47 to 1.30, indicating high ionic bond strength between the group I atom and the group VI$_b$ atom.

Likewise, in the III$_b$VI$_b$ type stoichiometric compounds constituting a part of recording materials (v-4) to (v-8), a difference in electronegativity between Te whose electronegativity is the lowest (1.47) of the group VI$_b$ elements and Ga whose electronegativity is the highest (1.13) of the group III$_b$ elements is 0.34. On the other hand, a difference between S whose electronegativity is the highest (1.87) of the group VI$_b$ elements and T$\ell$ whose electronegativity is the lowest (0.94) of the group III$_b$ elements is 0.93. That is, the electronegativity difference between the group III$_b$ element and the group VI$_b$ element widely ranges from 0.34 to 0.93, indicating high ionic bond strength between the group III$_b$ atom and the group VI$_b$ atom.

From these considerations, it is believed that the group I atom-group VI$_b$ atom bond strength or the group IIIb$_b$ atom-group VI$_b$ atom bond strength is higher than the strength of the interatomic bonds constituting Ge-Sb-Te (most of them are covalent bonds) by the strength corresponding to the ionic bond strength.

In recording materials (v-2) to (v-3), the stoichiometric three-element compound having a composition corresponding to a mixture of the I$_2$VI$_b$ type stoichiometric compound and the V$_{b2}$VI$_{b3}$ type stoichiometric compound, the III$_{b2}$VI$_{b3}$ type stoichiometric compound, or the IV$_b$VI$_{b2}$ type stoichiometric compound contains a bond of the group I atom and the group VI$_b$ atom exhibiting high bond strength. In recording materials (v-4) to (v-6), the stoichiometric compound having a composition corresponding to a mixture of the III$_b$VI$_b$ type stoichiometric compound and the IV$_b$VI$_b$ type stoichiometric compound, the IV$_b$VI$_{b2}$ type stoichiometric compound, or the III$_b$VI$_b$ type stoichiometric compound contains a bond of the group III$_b$ atom and the group VI$_b$ atom exhibiting high bond strength. In recording materials (v-7) and (v-8), the stoichiometric compound having a composition corresponding to a mixture of the III$_{b2}$VI$_{b3}$ type stoichiometric compound and the III$_{b2}$VI$_{b3}$ type stoichiometric compound or the IV$_b$VI$_b$ type stoichiometric compound contains a bond of the group III$_b$ atom and the group VI$_b$ atom exhibiting high bond strength. As a result, these materials have a reduced free energy in the crystal phase thereof as compared with Ge-Sb-Te and thereby have a greater difference in free energy between the crystal phase and the amorphous phase, i.e., a greater transition energy. This is assumed to be the reason why recording materials (v-2) to (v-8) have an increased rate of crystallization as compared with the conventional Ge-Sb-Te recording material.

Further, it is considered that the higher stability of the amorphous phase of recording materials (v-1) to (v-8) as compared with the conventional Ge-Sb-Te or $Sb_2Te_3$ recording materials can also be accounted for by the reason stated above with respect to recording material (ii).

In addition, recording materials (v-1) to (v-8) exert stronger inhibitory effects on atomic movement due to a difference in atomic radius from the nature of materials containing 4 or more kinds of elements and thus have higher activation energy as compared with the two-element material, $Sb_2Te_3$, or the three-element material, Ge-Sb-Te. From this viewpoint, too, these materials show further improved stability in the amorphous phase thereof.

Recording Material (vi):

Recording material (vi) is characterized by comprising a solid solution synthesized from plural elements or stoichiometric compounds having the same crystal system.

The term "crystal system" as used herein is in accordance with a classification of unit space lattices based on angle between two axes and length of axes, including seven crystal systems, i.e., triclinic, cubic, tetragonal, rhombohedral, orthorhombic, hexagonal, and monoclinic systems.

For example, Ga, In and $T\ell$ as the group $III_b$ elements; Ge, Sn, and Pb as the group $IV_b$ elements; As, Sb, and Bi as the group $V_b$ elements; S, Se, and Te as the group $VI_b$ elements; and stoichiometric compounds composed of these elements which constitute the solid solution of recording material (vi) can be classified based on the crystal system as shown in Table 3 below.

While a classification by strukturbericht, which relates to crystal structures taking the bond state of compounds into consideration in addition to the above-described classification of crystal system, divides crystals into A type (element) of from A1 to A20, B type (compound XY) of from B1 to b37, C type (compound $XY_2$) of from C1 to C54, D type ($X_mY_n$) of from $D\,0_2$ to $D\,8_{11}$, $H\,1_1$, $L\,1_0$ to $L\,2_2$, etc., it is preferred that the solid solution be synthesized from plural elements or stoichiometric compounds having the same crystal system based on the classification by strukturbericht. In Table 3, symbols in parentheses indicate crystal structure according to the classification by strukturbericht.

## TABLE 3

| | Rhombohedral | Orthorhombic | Cubic | | Hexagonal | Tetragonal | Monoclinic |
|---|---|---|---|---|---|---|---|
| One-Element | As (A7)<br>B (A7)<br>Sb (A7) | Ga (A11)<br>S (A17) | Pb (A1)<br>Tl (A3)<br>Ge (A4)<br>Sn (A4) | | S (A3)<br>Tl (A3)<br>Se (A8)<br>Te (A8) | Sn (A5)<br>In (A6) | S |
| Two-Element | Sb$_2$Te$_3$ (C33)<br>Bi$_2$Te$_3$ (C33)<br>Bi$_2$Se$_3$ (C33)<br>Sn$_4$As$_3$<br>In$_2$Se$_3$<br>Sn$_2$As$_2$ | SnSe (B29)<br>GeSe (B29)<br>Sb$_2$S$_3$ (D58)<br>Bi$_2$S$_3$ (D58)<br>Sb$_2$Se$_3$ (D58)<br>In$_2$Se<br>In$_6$Se$_7$<br>GeSe$_2$<br>SnS GeAs$_2$<br>InS Sn$_2$S$_3$ | SnTe (B1)<br>PbSe (B1)<br>PbTe (B1)<br>GeTe (B1)<br>BiTe (B1)<br>BiSe (B1)<br>SnAs (B1)<br>PbS (B1)<br>Tl$_7$Sb$_2$ (B2) | GaTe (B3)<br>GaSb (B3)<br>AsGa (B3)<br>InAs (B3)<br>InSb (B3)<br>Ga$_2$Se$_3$ (B3)<br>Ga$_2$Te$_3$ (B3) | GaSe<br>InSe<br>In$_2$Bi (C32)<br>TlBi$_2$ (C32)<br>SnSe$_2$<br>GaTe$_3$<br>GaS | TlTe<br>TlSe<br>(B37)<br>InTe<br>(B37)<br>InBi<br>(B10)<br>Tl$_2$Se | GaTe<br>GeAs<br>Tl$_2$Te$_3$<br>Tl$_2$Se$_3$<br>In$_2$Te$_5$<br>As$_2$Te$_3$<br>Ga$_2$S$_3$<br>In$_4$S$_5$ |
| Three-Element | GeSb$_4$Te$_7$  SnSb$_2$Te$_4$<br>GeBi$_4$Te$_7$  SnBi$_2$Te$_4$<br>PbBi$_4$Te$_7$  PbBi$_2$Se$_4$<br>PbBi$_4$Se$_7$  Ge$_2$Sb$_2$Te$_5$<br>GeSb$_2$Te$_4$  Ge$_2$Bi$_2$Te$_5$<br>GeBi$_2$Te$_4$  Sn$_2$Sb$_2$Se$_5$<br>Bi$_2$Te$_2$S (C33) | PbSnS$_2$ | | | GaGeTe$_2$<br>Ga$_2$GeTe$_3$ | | |

EP 0 387 898 B1

The solid solution synthesized from plural elements or stoichiometric compounds having the same crystal system includes a solid solution containing three or more kinds of elements and containing Se and/or Te, which is synthesized by mixing at least three elements having the same crystal system; a solid solution containing three or more kinds of elements and containing Se and/or Te, which is synthesized by mixing at least one element and at least one two-element compound having the same crystal system; a solid solution containing three or more kinds of elements and containing Se and/or Te, which is synthesized by mixing at least one element and at least one three-element compound having the same crystal system; a solid solution containing three or more kinds of elements and containing Se and/or Te, which is synthesized by mixing at least two two-element compounds having the same crystal system; a solid solution containing three or more kinds of elements and containing Se and/or Te, which is obtained by mixing at least two three-element compounds having the same crystal system; and a solid solution containing three or more kinds of elements and containing Se and/or Te, which is synthesized by mixing a two-element compound and a three-element compound having the same crystal system.

Referring to Table 3 above, specific examples of these solid solutions include a solid solution containing three or more kinds of elements synthesized by mixing elements selected from $T\ell$, S, Se, and Te, all of which belong to the hexagonal system; a solid solution containing three or more kinds of elements synthesized by mixing at least two 2-element compounds selected from $Sb_2Te_3$, $Bi_2Te_3$, $Bi_2Se_3$, etc., all of which belong to the rhombohedral system; a three-element solid solution synthesized by mixing SnTe (B1), GeTe (B1), and PbTe (B1), all of which belong to the cubic system; a three-element solid solution synthesized by mixing GeTe (B1), InSb (B3), and $T\ell_7Sb_2$ (B2), all of which belong to the cubic system; a solid solution containing three or more kinds of elements synthesized by mixing at least two three-element compounds selected from $GeSb_2Te_4$, $Ge_2Bi_2Te_5$, $PbBi_4Se_7$, etc., all of which belong to the rhombohedral system; a three-element solid solution synthesized by mixing an element, e.g., As, Bi, and Sb, and a two-element compound, e.g., $Sb_2Te_3$ and $Bi_2Te_3$, all of which belong to the rhombohedral system; and a solid solution containing three or more kinds of elements synthesized by mixing a two-element compound, e.g., $Sb_2Te_3$ and $Bi_2Te_3$, and a three-element compound, e.g., $GeSb_4Te_7$ and $GeBi_2Te_4$, all of which belong to the rhombohedral system.

The terminology "solid solution" as used herein means a phase which is formed by substituting an atom at a lattice point of a crystal phase characteristic of a certain element or compound by a different atom at random or a phase in which a different atom is statistically distributed in interstices of the lattice of a crystal phase characteristic of a certain element or compound, that is, a phase in which a foreign substance is uniformly dissolved in a certain crystal phase.

Of these solid solutions, congruent solid solution which has an inherent melting point and does not decompose up to this melting point are preferably used for recording material (vi).

Use of recording material (vi) makes it possible to shorten the time of crystallization of a recording material layer and, at the same time, to obtain increased stability in its amorphous phase.

The reason, the inventors believe, for the reduction in crystallization time achieved by recording material (vi) is as follows.

Recording material (vi) is comprised of a solid solution whose crystal phase is a single phase. Moreover, since the solid solution is synthesized from plural elements or stoichiometric compounds having the same crystal system, it has satisfactory crystal alignment with small lattice strain and a very small free energy in its crystal phase. Accordingly, the difference in free energy between the crystal phase and the amorphous phase, i.e., the transition energy becomes great to thereby reduce the time of crystallization in the recording material layer.

To the contrary, since the conventional Ge-Sb-Te recording material is synthesized by mixing cubic GeTe and rhombohedral $Sb_2Te_3$, it has extremely poor crystal alignment and contains large strain in the crystal lattice. Accordingly, the free energy in the crystal phase is large, and the difference in free energy between the crystal phase and the amorphous phase, i.e., the transition energy, is small. This appears to account for the slow crystallization of the conventional Ge-Sb-Te recording material layer.

The inventors believed, on the other hand, that the improvement in amorphous phase stability of recording material (vi) over the conventional $Sb_2Te_3$ recording material arises from strong covalent bond character of interatomic bonds between constituent elements of recording material (vi), i.e., the group $III_b$ elements (Ga, In, and $T\ell$), the group $IV_b$ elements (Ge, Sn, and Pb), the group $V_b$ elements (As, Sb, and Bi), and the group $VI_b$ elements (S, Se, and Te). Further, from the nature of a material containing three or more kinds of elements, recording material (vi) exerts strong inhibitory effects on atomic movement due to a difference of atomic radius thereby having larger activation energy than the two-element material, $Sb_2Te_3$. This is also a reason for the high stability of the amorphous phase.

In addition, since recording materials (i) to (vi) according to the present invention contain at least one of Se and Te, they absorb visible light and near infrared light.

The optical recording medium using the recording material according to the present invention basically comprises a light-transmitting substrate having thereon a recording material layer generally having a thickness of from 10 to 200 nm and preferably from 20 to 40 nm. For the purpose of preventing deformation of the recording material layer from being deformed in the period of from protecting the recording material layer from mechanical damage or oxidation, a protective layer may be provided on the recording material layer.

Examples of suitable light-transmitting substrates include glass and resin materials, e.g., acrylic resins, polycarbonate resins, and epoxy resins. In using resin materials, an inorganic dielectric material layer comprised of, for example, $SiO_2$, $ZrO_2$, $ZnS$, $Si_3N_4$, $Ta_2O_5$, $A\ell N$, $A\ell_2O_3$, etc., or a mixture thereof, may be provided between the recording material layer and the substrate in order to prevent thermal damage of the resin material. The thickness of the inorganic dielectric material layer is generally from 50 to 200 nm. In optical recording media which perform recording, reproduction, and erasing by irradiation with a light beam from the side opposite to the substrate, the substrate may be, as a matter of course, comprised of a light non-transmitting material, such as aluminum.

Materials of the protective layer include the same materials constituting the above-described inorganic dielectric material layer and, in addition, resin materials, e.g., ultraviolet curing resins, acrylic resins, polycarbonate resins, and epoxy resins, and glass. The protective layer may have either a single-layered structure or a multi-layered structure. The thickness of the protective layer is generally from 10 to 200 nm. Where a part of the protective layer in contact with the recording material layer is made of a resin material, an inorganic dielectric material layer may be inserted therebetween as in the case of the resinous substrate. Further, an adhesive layer of 1 to 10 μm in thickness may also be provided between the protective layer and the inorganic dielectric material layer. For the purpose, conventional adhesives such as a ultraviolet curing adhesive may be used.

The recording material layer can be formed by sputtering, vacuum deposition, or the like technique. Sputtering can be carried out by co-sputtering whereby a plurality of targets are employed, and a controlled power is applied to each target to synthesize any desired composition and, at the same time, to deposit the composition onto a substrate. Sputtering can also be performed by using a single alloy target corresponding to the desired composition.

For example, a plurality of targets which can be used for forming a recording layer of recording material (i) by simultaneous sputtering include alloy targets composed of the above-described $IV_bVI_b$ type stoichiometric compound or $V_{b2}VI_{b3}$ type stoichiometric compound, alloy targets prepared by arbitrarily mixing elements of the $IV_b$, $V_b$, and $VI_b$ groups, and a single target made up of an element selected from the groups $IV_b$, $V_b$, and $VI_b$.

A plurality of targets which can be used for forming a recording layer of recording material (ii) by simultaneous sputtering include alloy targets composed of the above-described $I_2VI_b$ type stoichiometric compound, $V_{b2}VI_{b3}$ type stoichiometric compound, $III_{b2}VI_{b3}$ type stoichiometric compound, etc., alloy targets prepared by arbitrarily mixing elements of the I, $III_b$, $IV_b$, $V_b$, and $VI_b$ groups, and a single target made up of an element selected from the groups I, $III_b$, $IV_b$, $V_b$, and $VI_b$.

A plurality of targets for forming a recording layer of recording material (iii) or (iv) by co-sputtering include alloy targets composed of the above-described $III_bVI_b$ type stoichiometric compound, $IV_bVI_b$ type stoichiometric compound, $IV_bVI_{b2}$ type stoichiometric compound, $III_{b2}VI_{b3}$ type stoichiometric compound, etc., alloy targets prepared by arbitrarily mixing elements of the $III_b$, $IV_b$, $V_b$, and $VI_b$ groups, and a single target made up of an element selected from the groups $III_b$, $IV_b$, $V_b$, and $VI_b$.

The above-described vacuum deposition can be conducted by using a plurality of vapor sources and controlling the respective rate of vaporization to obtain a desired composition and simultaneously deposit the composition onto a substrate.

In the optical recording medium of the invention, the amorphous phase of the recording material layer may correspond to a recorded state, with the crystal phase to an erased state, or vice versa.

The present invention is now illustrated in greater detail by way of Examples and Comparative Examples, but it should be understood that the present invention is not deemed to be limited thereto.

In Examples and Comparative Examples, recording and erasion characteristics of optical recording media were evaluated in terms of time of crystallization and stability of amorphous phase according to the following standards.

Standards for Evaluation:

1. Time of Crystallization

Good     Crystallization completes in 100 ns.

Poor     Crystallization does not complete in 100 ns.

2. Stability

Good     Crystallization temperature is 120°C or higher.

Poor    Crystallization temperature is less than 120°C.

COMPARATIVE EXAMPLE 1

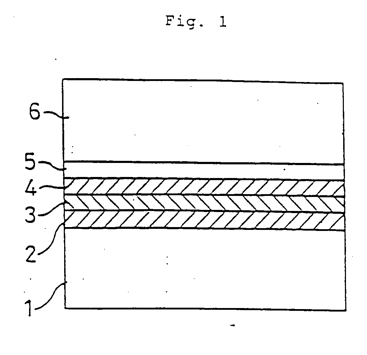

Optical recording media having a structure shown in Fig. 1 were prepared, each comprising 1.2 mm-thick acrylic resin substrate (1) having thereon 100 nm-thick inorganic dielectric material layer (2) made of $SiO_2$, 100 nm-thick recording material layer (3), 100 nm thick inorganic dielectric material layer (4) made of $SiO_2$, ultraviolet curable acrylic resin adhesive layer (5), and 1.2 mm-thick acrylic resin protective layer (6) in this order.

Recording material layer (3) was formed by sputtering using a radio frequency (RF) magnetron. In more detail, the alloy targets were mounted in the RF magnetron sputtering chamber, and the pressure in the chamber was reduced to $2 \times 10^{-6}$ Torr, followed by introducing argon gas to adjust the pressure to $4 \times 10^{-3}$ Torr. The RF power applied to the respective alloy targets was suitably controlled within the range of from 25 to 200 W to obtain recording material layers having compositions shown in Table 4 below. The resulting optical recording media were designated Samples 1 to 2.

Comparative Sample 1 or 2 was prepared by using Sb-Te or Ge-Sb-Te, respectively, as a recording material, with the layer structure being as indicated above. The recording material layer of Samples 1 or 2 was formed by RF magnetron sputtering using a single alloy target of $Sb_2Te_3$ or two alloy targets of $Sb_2Te_3$ and GeTe, respectively.

Samples 1 to 2 showed absorption in the wavelength region of from visible light to near infrared light and could be used as optical recording media at least in the wavelength region of from 400 nm to 860 nm.

Recording and erasion were carried out on each of Samples 1 to 2 using a semi-conductor laser having a wavelength of 830 nm as a light source. Recording and erasing characteristics were examined and evaluated according to the above-described standards, and the results obtained are shown in Table 4.

### TABLE 4

| Example No. | Sample No. | Composition of Recording Material | Time of Crystall- zation | Stability |
|---|---|---|---|---|
| Comparative Example 1 | 1 | $Sb_2Te_3$ | good | poor |
| " | 2 | $(GeTe)_{67}(Sb_2Te_3)_{33}$ | poor | good |

EXAMPLE 1

Optical recording media having a structure shown in <u>Fig. 1</u> were prepared, each comprising 1.2 mm-thick acrylic resin substrate (1) having thereon 100 nm-thick inorganic dielectric material layer (2) made of $SiO_2$, 100 nm-thick recording material layer (3) made of Li-Sb-Se, 100 nm-thick inorganic dielectric material layer (4) made of $SiO_2$, ultraviolet curable acrylic resin adhesive layer (5), and 1.2 mm-thick acrylic resin protective layer (6) in this order.

Recording material layer (3) was formed by sputtering using an RF magnetron and two alloy targets, $Li_2Se$ and $Sb_2Se_3$ while appropriately controlling the RF power to the respective alloy target so as to synthesize a composition shown in Table 5 below. The resulting optical recording media were designated Samples 3 and 4.

Samples 3 and 4 showed absorption in the wavelength region of from visible light to near infrared light and could be used as optical recording media at least in the wavelength region of from 400 nm to 860 nm.

Recording and erasion characteristics when these recording media were used by using a semi-conductor laser having a wavelength of 830 nm as a light source are also shown in Table 5.

## TABLE 5

| Sample No. | Composition of Recording Material | Time of Crystallization | Stability |
|---|---|---|---|
| 3 | $(Li_2Se)_{50}(Sb_2Se_3)_{50}$ | good | good |
| 4 | $(Li_2Se)_{40}(Sb_2Se_3)_{60}$ | good | good |

As is apparent from Table 5, Samples 3 and 4 have a reduced time of crystallization, making it possible to conduct recording and erasion of information at a higher speed, as compared with Sample 2 of Comparative Example 1 and also have an increased crystallization temperature, an indication of improved stability of the amorphous phase, as compared with Sample 1 of Comparative Example 1.

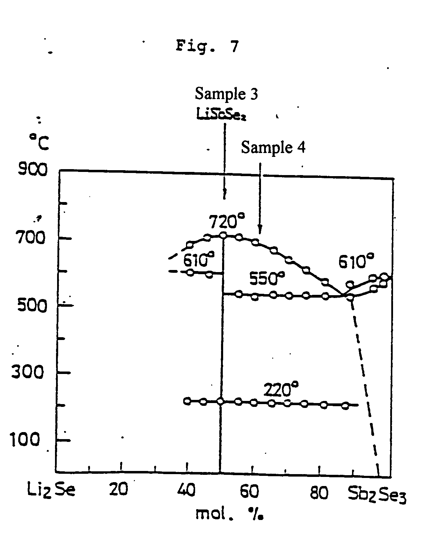

In particular, it was confirmed that the crystal phase of Li-Sb-Se in Sample 3 is a single phase composed of a congruent compound as expected from the pseudo-binary phase diagram of Fig. 7, i.e., $LiSbSe_2$. Therefore, the recording material had a short crystallization time and exhibited satisfactory stability on repetition of rewriting.

## EXAMPLE 2

Optical recording media (Samples 5 and 6) were prepared in the same manner as in Example 1, except that the recording material layer was composed of Na-Sb-Se.

The Na-Sb-Se recording material was formed by binary co-sputtering using two alloy targets of $Na_2Se$ and $Sb_2Se_3$.

Recording and erasion characteristics of the resulting optical recording media are shown in Table 6 below.

## EXAMPLE 3

Optical recording media were prepared in the same manner as in Example 1, except that the recording material layer was composed of Cu-Sb-Se.

The Cu-Sb-Se recording material was formed by binary co-sputtering using a single target prepared by mixing $Cu_2Se$ and $Sb_2Se_3$ at a ratio of 60:40 (Sample 7), 50:50 (Sample 8), or 40:60 (Sample 9).

Recording and erasion characteristics of the resulting optical recording media are shown in Table 6 below.

## TABLE 6

| Example No. | Sample No. | Composition of Recording Material | Time of Crystallization | Stability |
|---|---|---|---|---|
| Example 2 | 5 | $(Na_2Se)_{50}(Sb_2Se_3)_{50}$ | good | good |
| " | 6 | $(Na_2Se)_{40}(Sb_2Se_3)_{60}$ | good | good |
| Example 3 | 7 | $(Cu_2Se)_{60}(Sb_2Se_3)_{40}$ | good | good |
| " | 8 | $(Cu_2Se)_{50}(Sb_2Se_3)_{50}$ | good | good |
| " | 9 | $(Cu_2Se)_{40}(Sb_2Se_3)_{60}$ | good | good |

As is apparent from Table 6, Samples 5 to 9 have a reduced time of crystallization, making it possible to conduct recording and erasing of information at a higher speed, and also have a higher crystallization temperature, an indication of improved stability of the amorphous phase, as compared with Comparative Example 1, similarly to Samples 3 and 4 of Example 1.

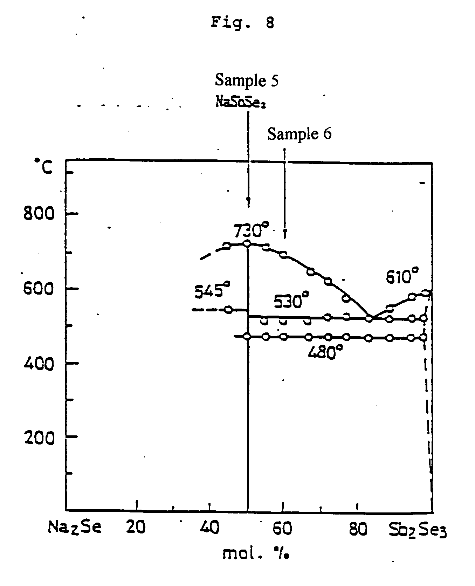

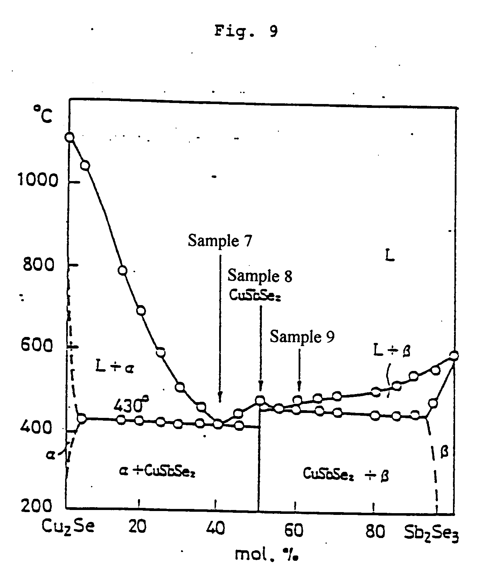

As expected from the pseudo-binary phase diagrams of Figs. 8 to 9, it was confirmed that the crystal phase of Na-Sb-Se in Sample 5, and Cu-Sb-Se in Sample 8 is a single phase composed of a stoichiometric compound which is stable at room temperature, i.e., $NaSbSe_2$, and $CuSbSe_2$, respectively.

It is apparent from Examples 1 to 3 that use of recording material (ii) according to the present invention reduces the time of crystallization of the recording material layer and increases stability of the recording material layer in its amorphous phase.

The optical recording media using recording material (ii) are thus capable of rewriting at a high speed and maintaining recorded information for an extended period of time.

Because recording material (ii) shows absorption of visible and near infrared light due to the presence of at least one of Se and Te, widespread light sources inclusive of semiconductor lasers can be applied to the optical recording media using recording material (ii).

Where the crystal phase of recording material (ii) is a single phase composed of a stoichiometric compound, the free energy of the crystal phase is further reduced, which leads to further reduction of the crystallization time. In addition, because such a crystal phase does not suffer from phase separation, the recording characteristics remain unchanged even rewriting is conducted many times.

Where the above-described stoichiometric compound is composed of a congruent compound, local crystallization does not take place during cooling so that unchangeability of the recording characteristics on repeated use is further ensured.

EXAMPLE 4

Optical recording media having a structure shown in Fig. 1 were prepared, each comprising 1.2 mm-thick acrylic resin substrate (1) having thereon 100 nm-thick inorganic dielectric material layer (2) made of $SiO_2$, 100 nm-thick recording material layer (3) made of Ga-Ge-Te, 100 nm-thick inorganic dielectric material layer (4) made of $SiO_2$, ultraviolet curable acrylic resin adhesive layer (5), and 1.2 mm-thick acrylic resin protective layer (6) in this order.

Recording material layer (3) was formed by sputtering using an RF magnetron and two alloy targets, GaTe and GeTe while appropriately controlling the RF power to the respective alloy target so as to synthesize a composition shown in Table 7 below. The resulting optical recording media were designated Samples 10 to 12.

Samples 10 to 12 showed absorption in the wavelength region of from visible light to near infrared light and could be used as optical recording media at least in the wavelength region of from 400 nm to 860 nm.

Recording and erasion characteristics when these recording media were used by using a semi-conductor laser having a wavelength of 830 nm as a light source are also shown in Table 7.

## TABLE 7

| Sample No. | Composition of Recording Material | Time of Crystall- zation | Stabilityy |
|---|---|---|---|
| 10 | $(GaTe)_{50}(GeTe)_{50}$ | good | good |
| 11 | $(GaTe)_{60}(GeTe)_{40}$ | good | good |
| 12 | $(GaTe)_{67}(GeTe)_{33}$ | good | good |

As is apparent from Table 7, Samples 10 to 12 have a reduced time of crystallization as compared with Sample 2 of Comparative Example 1, making it possible to conduct recording and erasing of information at a higher speed, and also have a higher crystallization temperature as compared with Sample 1 of Comparative Example 1, indicating improved stability of the amorphous phase.

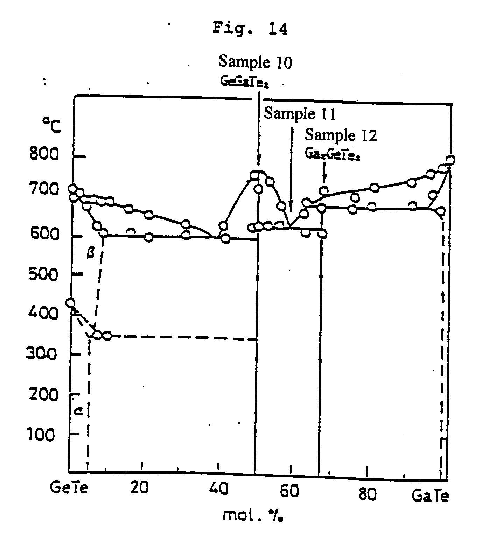

As expected from the pseudo-binary phase diagrams of Fig. 14, it was confirmed that the crystal phase of Ga-Ge-Te in Samples 10 and 12 is a single phase composed of a stoichiometric compound which is stable at room temperature, i.e., $GaGeTe_2$ and $Ga_2GeTe_3$, respectively. In particular, $GaGeTe_2$ of Sample 10 is a congruent compound and, therefore, the sample had a shorter crystallization time and exhibited higher stability on repetition of rewriting.

EXAMPLE 5

Optical recording media (Samples 13 to 15) were prepared in the same manner as in Example 4, except that the recording material layer was composed of In-Ge-Te.

The In-Ge-Te recording material was formed by binary co-sputtering using a single target obtained by mixing InTe and GeTe at a ratio of 50:50 (Sample 13), 60:40 (Sample 14) or 67:33 (Sample 15).

Recording and erasing characteristics of the resulting optical recording media are shown in Table 8 below.

EXAMPLE 6

A optical recording medium was prepared in the same manner as in Example 4, except that the recording material layer was composed of In-Sn-Te.

The In-Sn-Te recording material was formed by binary co-sputtering using two alloy targets of InTe and SnTe.

Recording and erasing characteristics of the resulting optical recording media are shown in Table 8 below.

EXAMPLE 7

Optical recording media (Samples 17 to 18) were prepared in the same manner as in Example 4, except that the recording material layer was composed of In-Pb-Te.

The In-Pb-Te recording material was formed by binary co-sputtering using two alloy targets of InTe and PbTe.

Recording and erasing characteristics of the resulting optical recording media are shown in Table 8 below.

EXAMPLE 8

Optical recording media (Samples 19 to 21) were prepared in the same manner as in Example 4, except that the recording material layer was composed of $T\ell$-Ge-Te.

The $T\ell$-Ge-Te recording material was formed by binary co-sputtering using two alloy targets of $T\ell$Te and GeTe.

Recording and erasing characteristics of the resulting optical recording media are shown in Table 8 below.

EXAMPLE 9

Optical recording media (Samples 22 to 24) were prepared in the same manner as in Example 4, except that the recording material layer was composed of Ga-$T\ell$-Se.

The Ga-$T\ell$-Se recording material was formed by binary co-sputtering using a single target prepared by mixing GaSe and TeSe at a ratio of 40:60 (Sample 22), 50:50 (Sample 23), or 60:40 (Sample 24).

Recording and erasing characteristics of the resulting optical recording media are shown in Table 8 below.

EXAMPLE 10

Optical recording media (Samples 25 to 27) were prepared in the same manner as in Example 4, except that the recording material layer was composed of In-$T\ell$-Se.

The In-$T\ell$-Se recording material was formed by binary co-sputtering using two alloy targets of InSe and $T\ell$Se.

Recording and erasing characteristics of the resulting optical recording media are shown in Table 8 below.

EXAMPLE 11

Optical recording media (Samples 28 to 30) were prepared in the same manner as in Example 4, except that the recording material layer was composed of Ga-Se-Te.

The Ga-Se-Te recording material was formed by binary co-sputtering using two alloy targets of GaSe and GaTe.

Recording and erasing characteristics of the resulting optical recording media are shown in Table 8 below.

## EXAMPLE 12

Optical recording media (Samples 31 to 33) were prepared in the same manner as in Example 4, except that the recording material layer was composed of In-S-Te.

The In-S-Te recording material was formed by binary co-sputtering using two alloy targets of $In_2S_3$ and $In_2Te_3$.

Recording and erasing characteristics of the resulting optical recording media are shown in Table 8 below.

## EXAMPLE 13

Optical recording media (Samples 34 to 35) were prepared in the same manner as in Example 4, except that the recording material layer was composed of Ga-Sn-Te.

The Ga-Sn-Te recording material was formed by binary co-sputtering using two alloy targets of $Ga_2Te_3$ and SnTe.

Recording and erasing characteristics of the resulting optical recording media are shown in Table 8 below.

## EXAMPLE 14

A optical recording medium (Sample 36) was prepared in the same manner as in Example 4, except that the recording material layer was composed of Ga-Ge-Se.

The Ga-Ge-Se recording material was formed by binary co-sputtering using two alloy targets of GaSe and $GeSe_2$.

Recording and erasing characteristics of the resulting optical recording medium are shown in Table 8 below.

## TABLE 8

| Example No. | Sample No. | Composition of Recording Material | Time of Crystal-lization | Stability |
|---|---|---|---|---|
| Example 5 | 13 | $(InTe)_{50}(GeTe)_{50}$ | good | good |
| " | 14 | $(InTe)_{60}(GeTe)_{40}$ | good | good |
| " | 15 | $(InTe)_{67}(GeTe)_{33}$ | good | good |
| Example 6 | 16 | $(InTe)_{75}(SnTe)_{25}$ | good | good |
| Example 7 | 17 | $(InTe)_{50}(PbTe)_{50}$ | good | good |
| " | 18 | $(InTe)_{60}(PbTe)_{40}$ | good | good |
| Example 8 | 19 | $(T\ell Te)_{50}(GeTe)_{50}$ | good | good |
| " | 20 | $(T\ell Te)_{60}(GeTe)_{40}$ | good | good |
| " | 21 | $(T\ell Te)_{67}(GeTe)_{33}$ | good | good |
| Example 9 | 22 | $(GaSe)_{40}(T\ell Se)_{60}$ | good | good |
| " | 23 | $(GaSe)_{50}(T\ell Se)_{50}$ | good | good |
| " | 24 | $(GaSe)_{60}(T\ell Se)_{40}$ | good | good |

/To be cont'd.

## TABLE 8 (cont'd.)

| Example No. | Sample No. | Composition of Recording Material | Time of Crystal- lization | Stability |
|---|---|---|---|---|
| Example 10 | 25 | $(InSe)_{40}(T\ell Se)_{60}$ | good | good |
| " | 26 | $(InSe)_{50}(T\ell Se)_{50}$ | good | good |
| " | 27 | $(InSe)_{60}(T\ell Se)_{40}$ | good | good |
| Example 11 | 28 | $(GaSe)_{40}(GaTe)_{60}$ | good | good |
| " | 29 | $(GaSe)_{50}(GaTe)_{50}$ | good | good |
| " | 30 | $(GaSe)_{60}(GaTe)_{40}$ | good | good |
| Example 12 | 31 | $(In_2S_3)_{40}(In_2Te_3)_{60}$ | good | good |
| " | 32 | $(In_2S_3)_{33}(In_2Te_3)_{67}$ | good | good |
| " | 33 | $(In_2S_3)_{25}(In_2Te_3)_{75}$ | good | good |
| Example 13 | 34 | $(Ga_2Te_3)_{60}(SnTe)_{40}$ | good | good |
| " | 35 | $(Ga_2Te_3)_{67}(SnTe)_{33}$ | good | good |
| Example 14 | 36 | $(GaSe)_{50}(GeSe_2)_{50}$ | good | good |

As is apparent from Table 8, Samples 13 to 36 have a reduced time of crystallization, making it possible to conduct recording and erasing of information at a higher speed, and also have a higher crystallization temperature, an indication of improved stability of the amorphous phase, as compared with Comparative Example 1, similarly to Samples 10 to 12 of Example 4.

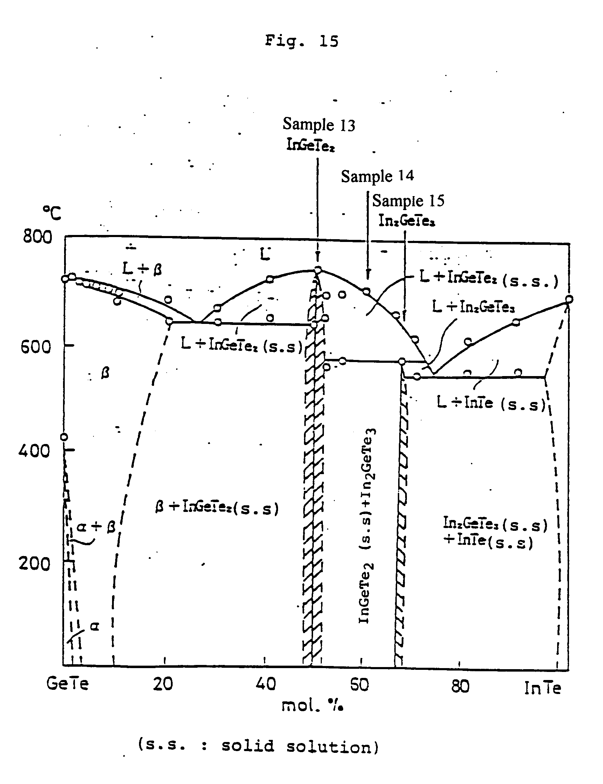

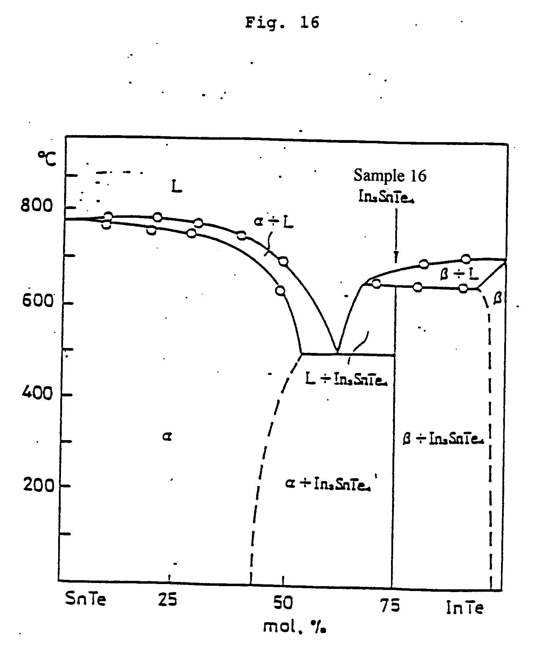

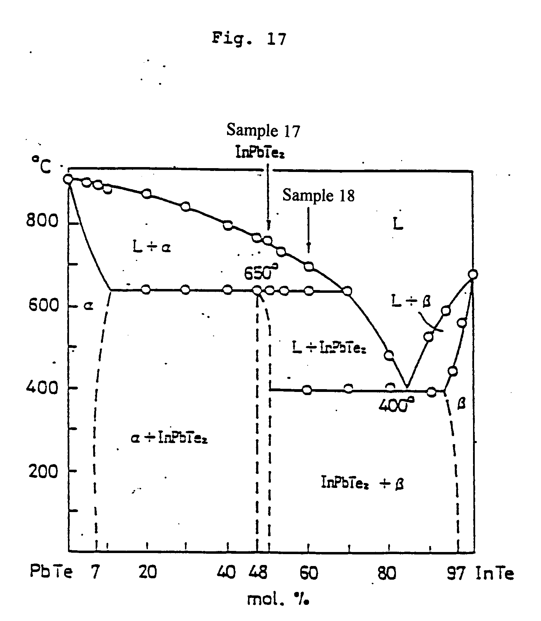

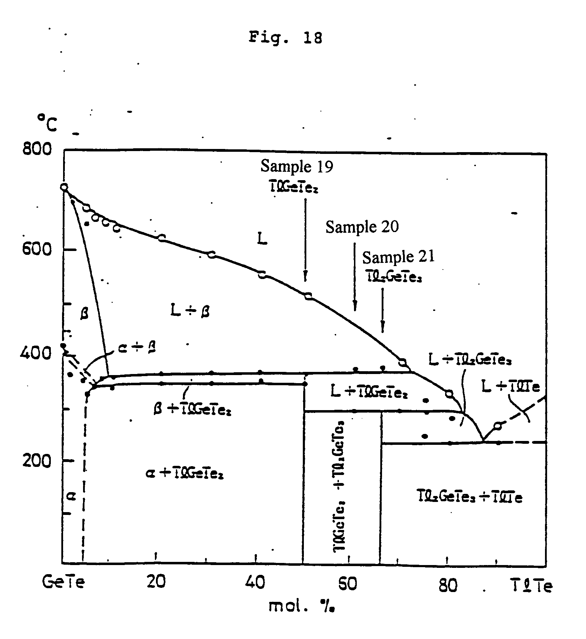

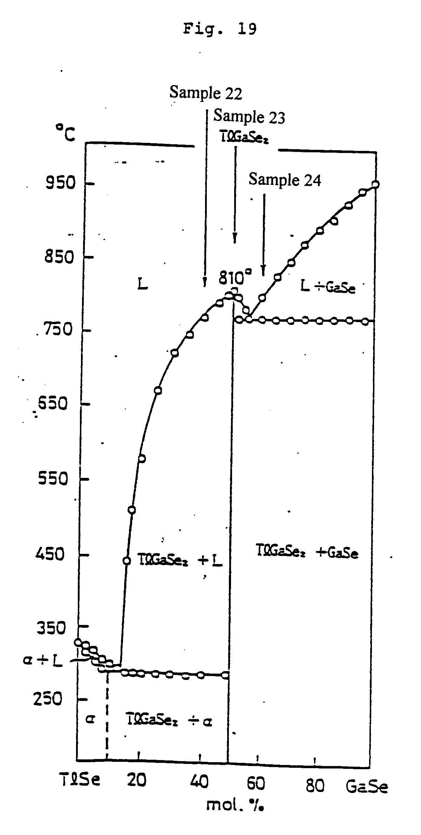

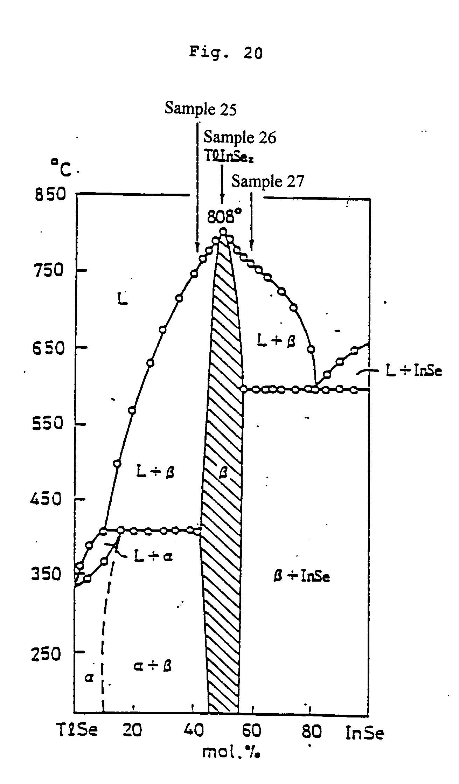

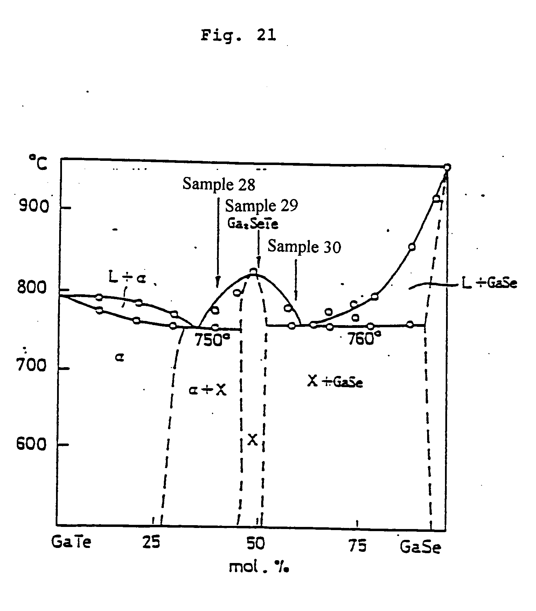

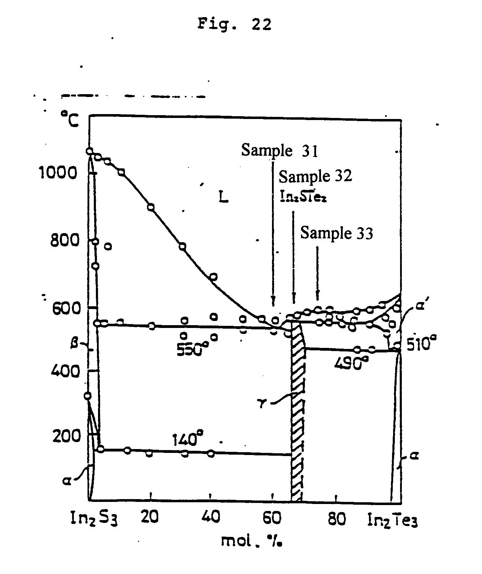

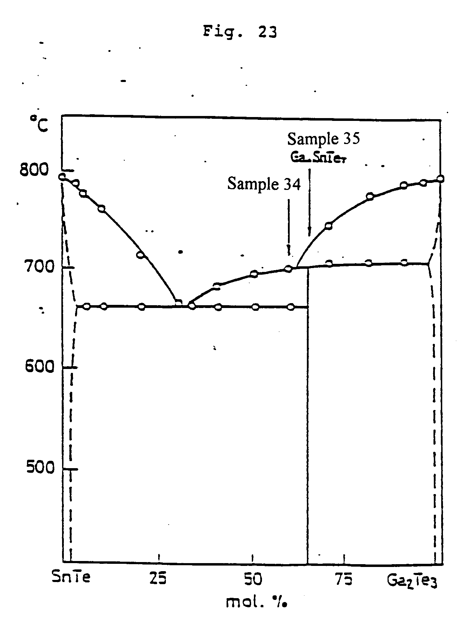

As expected from the pseudo-binary phase diagrams of Figs. 15 to 23, it was confirmed that the crystal phase of In-Ge-Te in Samples 13 and 15, In-Sn-Te in Sample 16, In-Pb-Te in Sample 17, $T\ell$-Ge-Te in Samples 19 and 21, Ga-$T\ell$-Se in Sample 23, In-$T\ell$-Se in Sample 26, Ga-Se-Te in Sample 29, In-S-Te in Sample 32, and Ga-Sn-Te in Sample 35 is a single phase composed of a stoichiometric compound which is stable at room temperature, i.e., $InGeTe_2$, $In_2GeTe_3$, $In_3SnTe_4$, $InPbTe_2$, $T\ell GeTe_2$, $T\ell_2GeTe_3$, $T\ell GaSe_2$, $T\ell InSe_2$, $Ga_2SeTe$, $In_2STe_2$, and $Ga_4SnTe_7$, respectively. In particular, $InGeTe_2$ of Sample 13, $T\ell GaSe_2$ of Sample 23, $T\ell InSe_2$ of Sample 26, $Ga_2SeTe$ of Sample 29, and $In_2STe_2$ of Sample 32 are congruent compounds and, therefore, these samples had a short crystallization time and exhibited satisfactory stability on repetition of rewriting.

Further, the crystal phase of Ga-Ge-Se of Sample 36 is also composed of a stoichiometric compound stable at room temperature as represented by $GaGeSe_3$, and the sample had a short crystallization time and exhibited satisfactory stability on repetition of rewriting.

It is apparent from Examples 4 to 14 that use of recording material (iii) or (iv) according to the present invention reduces the time of crystallization of the recording material layer and increases stability of the recording material layer in its amorphous phase.

The optical recording media using these recording materials are thus capable of rewriting at a high speed and maintaining recorded information for an extended period of time.

Because recording materials (iii) and (iv) show absorption of visible and near infrared light due to the presence of at least one of Se and Te, semi-conductor lasers can be applied to the optical recording media using these recording materials.

Where the crystal phase of the recording material is a single phase composed of a stoichiometric compound, the free energy of the crystal phase is further reduced, which leads to further reduction of the crystallization time. In addition, because such a crystal phase does not suffer from phase separation, the recording characteristics remain unchanged even rewriting is conducted many times.

Where the above-described stoichiometric compound is composed of a congruent compound, segregation does not take place during cooling so that unchangeability of the recording characteristics on repeated use is further ensured.

EXAMPLE 15 AND COMPARATIVE EXAMPLE 2

Optical recording media (Samples 37 to 38) having a structure shown in Fig. 1 were prepared, each comprising 1.2 mm-thick acrylic resin substrate (1) having thereon 100 nm-thick inorganic dielectric material layer (2) made of $SiO_2$, 100 nm-thick recording material layer (3) made of Sn-Sb-Bi-Te (Sample 37) or Sn-Sb-Se-Te (Sample 38), 100 nm-thick inorganic dielectric material layer (4) made of $SiO_2$, ultraviolet curable acrylic resin adhesive layer (5), and 1.2 mm-thick acrylic resin protective layer (6) in this order.

Recording material layer (3) was formed by sputtering using an RF magnetron and two alloy targets of $(SnSb_2Te_4)$ and $(SnBi_2Te_4)$ or two alloy targets of $(SnSb_2Te_4)$ and $(SnSe_2Te_4)$, respectively, while appropriately controlling the RF power to the respective alloy target so as to obtain a four-element solid solution having a composition shown in Table 9 below. In Sample 37, $(SnSb_2Te_4)$ and $(SnBi_2Te_4)$ were used at a ratio of 45:55, and in Sample 38, $(SnSb_2Te_4)$ and $(SnSe_2Te_4)$ were used at a ratio of 74:26.

Comparative Samples 39 and 40 were prepared by using as a recording material Ge-Sb-Te or Sn-Sb-Te, respectively, with the layer structure being the same as Samples 37 and 38. (Comparative Example 2) The recording material layer of Samples 39 or 40 was formed by RF magnetron sputtering using two alloy targets of $Sb_2Te_3$ and GeTe at a ratio of 67:33 or two alloy targets of $Sb_2Te_3$ and SnTe at a ratio of 50:50, respectively.

Samples 37 to 40 showed absorption in the wavelength region of from visible light to near infrared light and could be used as optical recording media at least in the wavelength region of from 400 nm to 860 nm.

Recording and erasing characteristics when these recording media were used by using a semi-conductor laser having a wavelength of 830 nm as a light source are also shown in Table 9. In Table 9, stability was rated according to the following standards.

Standards for Evaluation:

| Excellent | Crystallization temperature is higher than 160°C. |
|---|---|
| Good | Crystallization temperature is from 120°C to 160°C. |
| Poor | Crystallization temperature is less than 120°C. |

## TABLE 9

| Example No. | Sample No. | Composition of Recording Material | Time of Crystallization | Stability |
|---|---|---|---|---|
| Example 15 | 37 | $Sn_{14}Sb_{13}Bi_{16}Te_{57}$ | good | excellent |
| " | 38 | $Sn_{14}Sb_{29}Se_{15}Te_{42}$ | good | excellent |
| Comparative Example 2 | 39 | $Ge_8Sb_{34}Te_{58}$ | poor | good |
| " | 40 | $Sn_{14}Sb_{29}Te_{57}$ | good | good |

As is apparent from Table 9, Samples 37 and 38 according to the present invention have a reduced time of crystallization as compared with Sample 39 of Comparative Example 2, making it possible to conduct recording and erasing of information at a higher speed, and also have a higher crystallization temperature, an indication of improved stability of the amorphous phase, as compared with Sample 40 of Comparative Example 2 and Sample 1 of Comparative Example 1 (see Table 4).

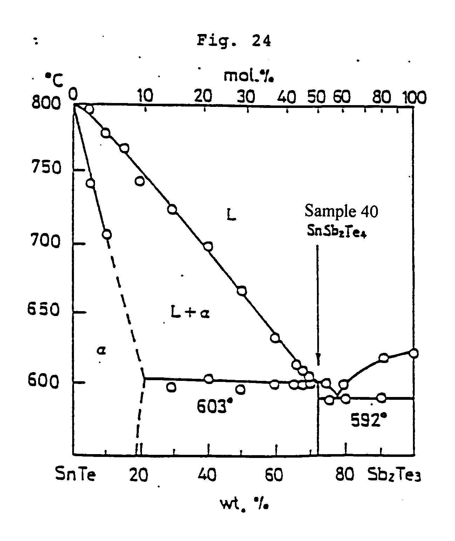

The recording material in Samples 37 or 38 is a four-element solid solution having a composition corresponding to a structure obtained by partly substituting Sb and Te in $SnSb_2Te_4$ of Sample 40 whose pseudo-binary phase diagram is shown in Fig. 24 by Bi or Se, respectively (Bi or Se and the elements to be substituted can four a full-range solid solution. The results of Table 9 proved that the stability of the amorphous phase can be ensured by such partial substitution.

## EXAMPLE 16

A optical recording medium was prepared in the same manner as in Example 15, except that the recording material layer was composed of Li-Sb-Se-Te.

The Li-Sb-Se-Te recording layer was formed by sputtering using a single target of a four-element solid solution having a composition of $Li_{25}Sb_{25}Se_{30}Te_{20}$.

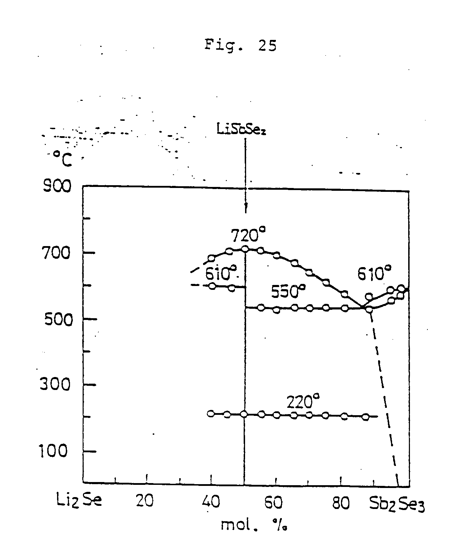

The four-element solid solution had a composition corresponding to a structure obtained by partly substituting Se, a constituent element of $LiSbSe_2$ whose pseudo-binary phase diagram is shown in Fig. 25, by Te which can form a full-range solid solution with Se.

Recording and erasing characteristics of the resulting optical recording medium are shown in Table 10 below.

## EXAMPLE 17

A optical recording medium was prepared in the same manner as in Example 15, except that the recording material layer was composed of Cu-Au-Sn-Se.

The Cu-Au-Sn-Se recording layer was formed by sputtering using a single target of a four-element solid solution having a composition of $Cu_{27}Au_{25}Sn_{13}Se_{37}$.

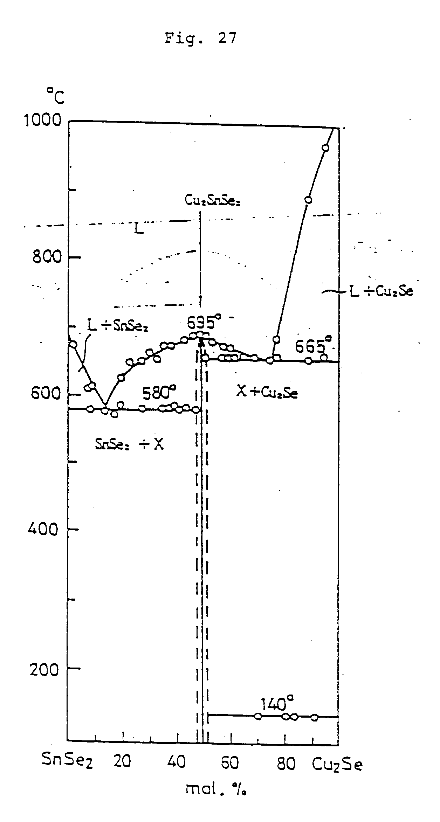

The four-element solid solution had a composition corresponding to a structure obtained by partly substituting Cu, a constituent element of $Cu_2SnSe_3$ whose pseudo-binary phase diagram is shown in Fig. 27, by Au.

Recording and erasion characteristics of the resulting optical recording medium are shown in Table 10 below.

## EXAMPLE 18

A optical recording medium was prepared in the same manner as in Example 15, except that the recording material layer was composed of In-Ge-Se-Te.

The In-Ge-Se-Te recording layer was formed by sputtering using a single target of a four-element solid solution having a composition of $In_{25}Ge_{25}Se_{13}Te_{37}$.

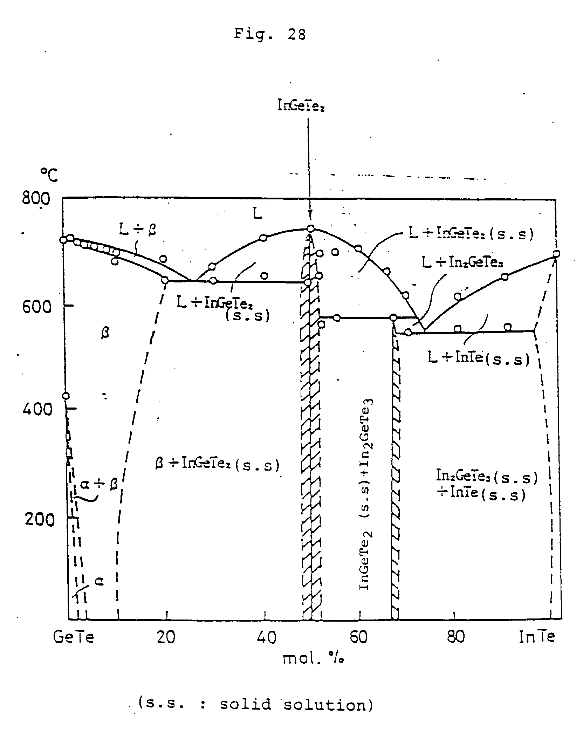

The four-element solid solution had a composition corresponding to a structure obtained by partly substituting Te, a constituent element of $InGeTe_2$ whose pseudo-binary phase diagram is shown in Fig. 28, by Se which can form a full-range solid solution with Te.

Recording and erasing characteristics of the resulting optical recording medium are shown in Table 10 below.

## EXAMPLE 19

A optical recording medium was prepared in the same manner as in Example 15, except that the recording material layer was composed of Ga-Tℓ-Ge-Se.

The Ga-Tℓ-Ge-Se recording layer was formed by sputtering using a single target of a four-element solid solution having a composition of $Ga_{15}Tℓ_5Ge_{20}Se_{60}$.

The four-element solid solution had a composition corresponding to a structure obtained by partly substituting Ga, a constituent element of $GaGeSe_3$, by Tℓ.

Recording and erasing characteristics of the resulting optical recording medium are shown in Table 10 below.

## EXAMPLE 20

A optical recording medium was prepared in the same manner as in Example 15, except that the recording material layer was composed of In-Tℓ-Se-Te.

The In-Tℓ-Se-Te recording layer was formed by sputtering using a single target of a four-element solid solution having a composition of $In_{25}Tℓ_{25}Se_{30}Te_{20}$.

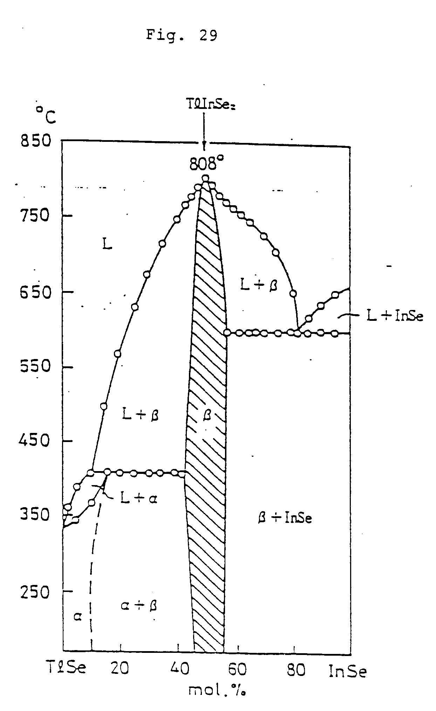

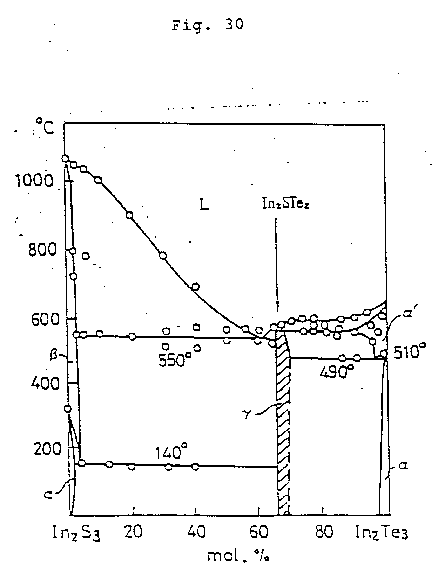

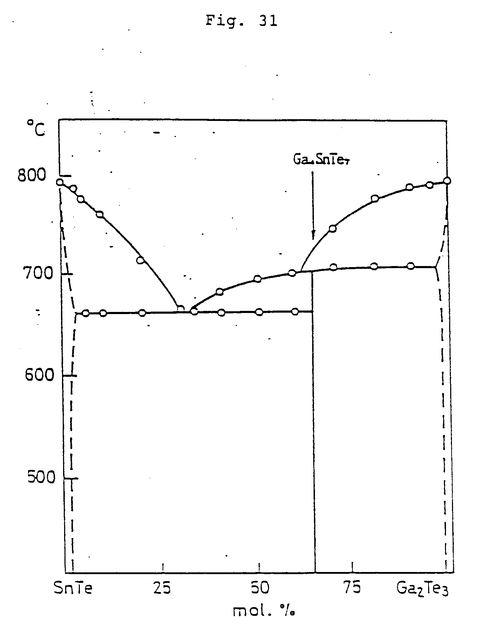

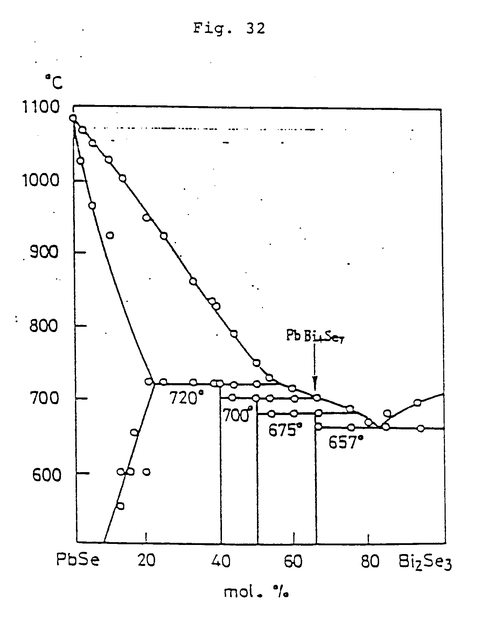

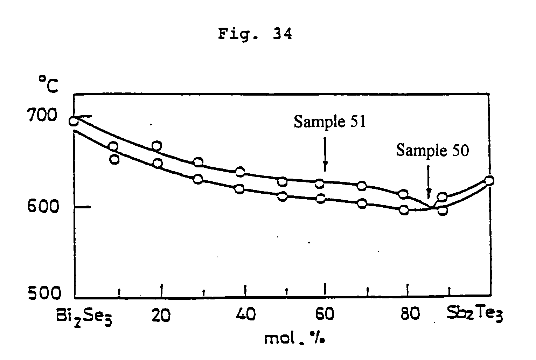

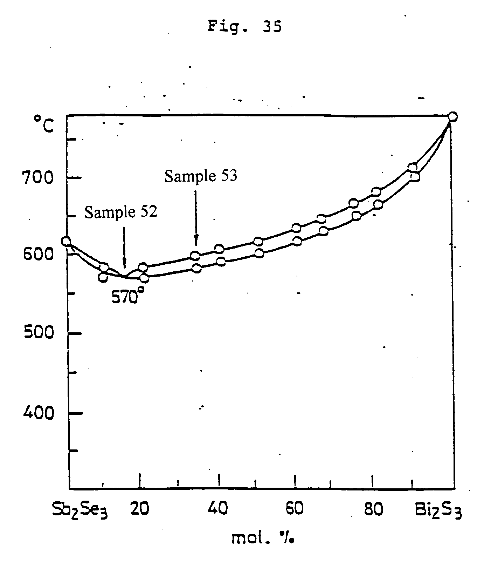

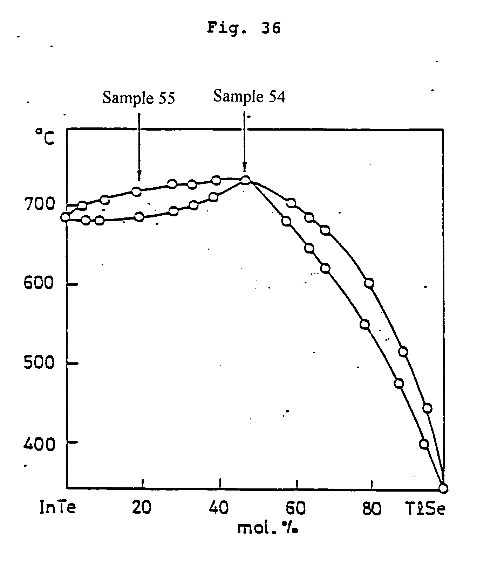

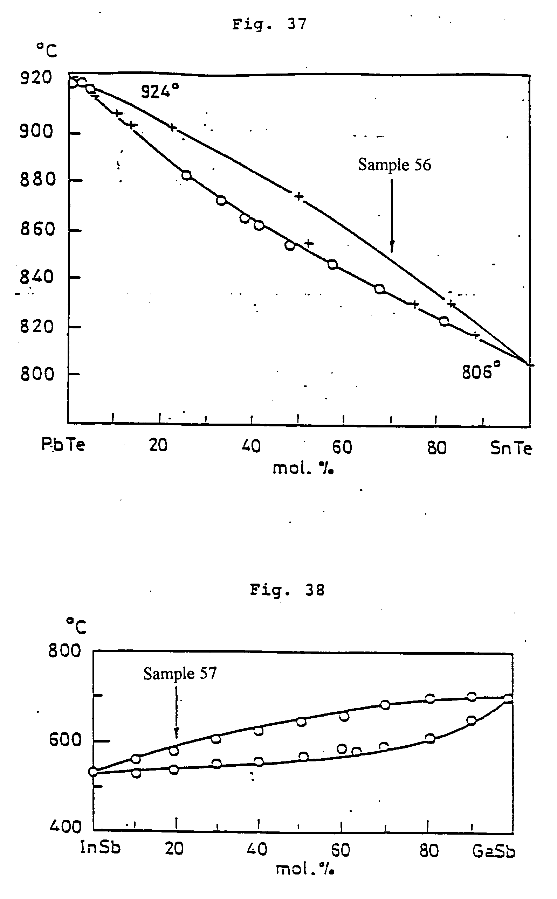

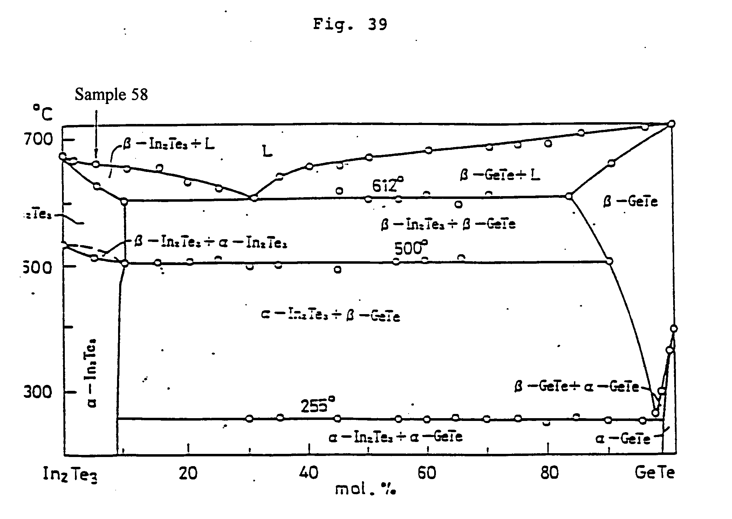

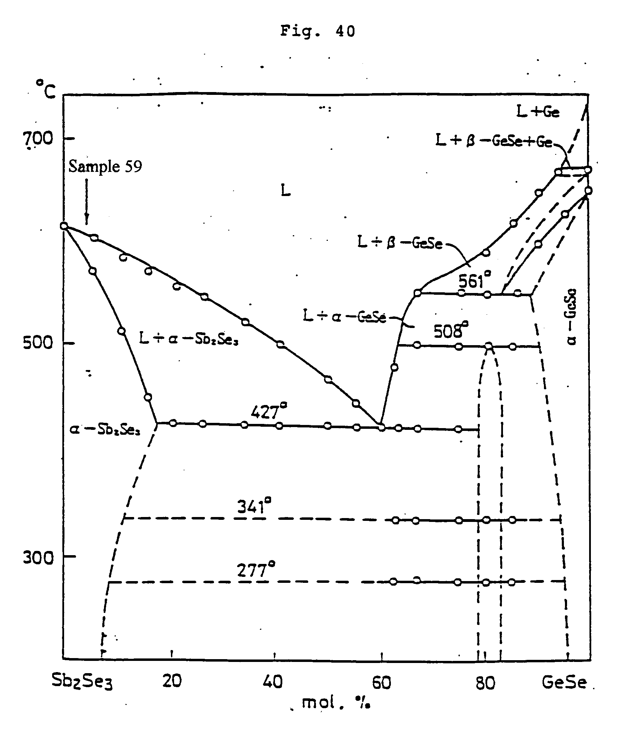

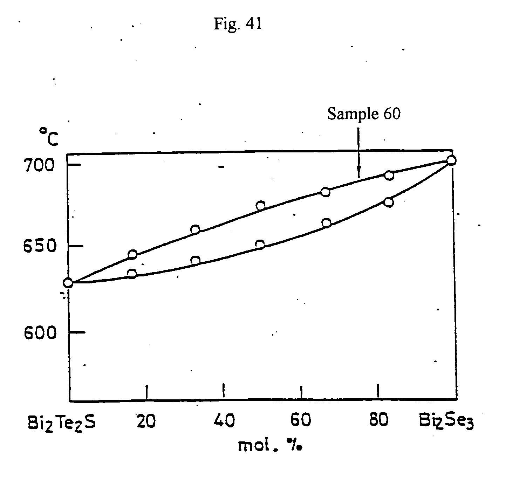

The four-element solid solution had a composition corresponding to a structure obtained by partly substituting Se, a constituent element of $InTℓSe_2$ whose pseudo-binary phase diagram is shown in Fig. 29, by Te which can form a full-range solid solution with Se.

Recording and erasion characteristics of the resulting optical recording medium are shown in Table 10 below.

EXAMPLE 21

An optical recording medium was prepared in the same manner as in Example 15, except that the recording material layer was composed of In-S-Se-Te.

The In-S-Se-Te recording layer was formed by sputtering using a single target of a four-element solid solution having a composition of $In_{40}S_{20}Se_{13}Te_{27}$.

The four-element solid solution had a composition corresponding to a structure obtained by partly substituting Te, a constituent element of $In_2STe_2$ whose pseudo-binary phase diagram is shown in <u>Fig. 30,</u> by Se which can form a full-range solid solution with Te.

Recording and erasing characteristics of the resulting optical recording medium are shown in Table 10 below.

EXAMPLE 22

A optical recording medium (Sample 47 or 48) was prepared in the same manner as in Example 15, except that the recording material layer was composed of Ga-Tℓ-Sn-Te or Ga-Sn-Se-Te, respectively.

The Ga-Tℓ-Sn-Te recording material layer of Sample 47 was formed by sputtering using a single target of a four-element solid solution having a composition of $Ga_{29}Tℓ_5Sn_8Te_{58}$. The Ga-Sn-Se-Te recording material layer of Sample 48 was formed by sputtering using a single target of a four-element solid solution having a composition of $Ga_{34}Sn_8Se_{15}Te_{43}$.

The four-element solid solution of Sample 47 had a structure obtained by partly substituting Ga, a constituent element of $Ga_4SnTe_7$ whose pseudo-binary phase diagram is shown in <u>Fig. 31</u>, by Tℓ. On the other hand, the four-element solid solution of Sample 48 had a structure obtained by partly substituting Te, a constituent element of $Ga_4SnTe_7$ whose pseudo-binary phase diagram is shown in <u>Fig. 31</u>, by Se which can form a full-range solid solution with Te.

Recording and erasing characteristics of the resulting optical recording medium are shown in Table 10 below.

EXAMPLE 23

A optical recording medium was prepared in the same manner as in Example 15, except that the recording material layer was composed of Pb-Bi-S-Se-Te.

The Pb-Bi-S-Se-Te recording material layer was a five-element solid solution formed by simultaneous sputtering using three alloy targets of (PbSe), $(Bi_2Se_3)$, and $(Bi_2STe_2)$ at a ratio of 33:51:16.

The five-element solid solution had a structure obtained by partly substituting Se, a constituent element of $PbBi_4Se_7$ whose pseudo-binary phase diagram is shown in <u>Fig. 32,</u> by S and Te.

Recording and erasing characteristics of the resulting optical recording media are shown in Table 11 below.

## TABLE 10

| Example No. | Sample No. | Composition of Recording Material | Time of Crystall-zation | Stability |
|---|---|---|---|---|
| Example 16 | 41 | $Li_{25}Sb_{25}Se_{30}Te_{20}$ | good | excellent |
| " 17 | 42 | $Cu_{27}Au_6Sn_{17}Se_{50}$ | good | excellent |
| " 18 | 43 | $In_{25}Ge_{25}Se_{13}Te_{37}$ | good | excellent |
| " 19 | 44 | $Ga_{15}Tℓ_5Ge_{20}Se_{60}$ | good | excellent |
| " 20 | 45 | $In_{25}Tℓ_{25}Se_{30}Te_{20}$ | good | excellent |
| " 21 | 46 | $In_{40}S_{20}Se_{13}Te_{27}$ | good | excellent |
| " 22 | 47 | $Ga_{29}Tℓ_5Sn_8Te_{58}$ | good | excellent |
| " 22 | 48 | $Ga_{34}Sn_8Se_{15}Te_{43}$ | good | excellent |
| " 23 | 49 | $Pb_8Bi_{33}S_4Se_{47}Te_8$ | good | excellent |

As is apparent from Table 10, Samples 41 to 49 according to the present invention have a reduced time of crystallization, making it possible to conduct recording and erasing of information at a higher speed, and also have a higher crystallization temperature, an indication of improved stability of the amorphous phase, as compared with Comparative Examples 1 and 2, similarly to Samples 37 and 38 of Example 15.

The four-element solid solutions of Samples 44 and 47 possess a structure obtained by partly substituting Ga of GaGeSe$_3$ or Ga or Ga$_4$SnTe$_7$, respectively, by Tℓ and, hence, exhibited accelerated crystallization.

As is obvious from Examples 15 to 23, recording materials (v-1) to (v-8) have a crystal structure of a stoichiometric ternary compound having the respectively specified composition so that they have an increased rate of crystallization and improved stability in the amorphous phase thereof.

In recording materials (v-1) to (v-8), since at least one of the three constituent elements of the stoichiometric three-element compound is partly substituted by other element(s) to form a solid solution containing 4 or more kinds of elements, the stability of the amorphous phase of the recording material layer can further be improved.

Accordingly, the optical recording media using these recording materials are capable of not only conducting rewriting at a high speed but also maintaining the recorded information for a prolonged period of time.

Further, since recording materials (v-1) to (v-8) contain at least one of Se and Te and thus absorb visible to near infrared light, widespread light sources inclusive of semi-conductor lasers, can be utilized for recording.

In the cases when the constituent element(s) of the stoichiometric three-element compound which is(are) to be substituted and the element(s) which substitute for the constituent element(s) are in the mutual relationship that they can form a full-range solid solution, the strain of crystal structure attended by the substitution is relatively small so that structural changes of the stoichiometric three-element compound due to the substitution can be minimized. Therefore, a permissible degree of substitution can be broadened to advantage.

In particular, where constituent element(s) of the stoichiometric three-element compound is(are) partly substituted by Tℓ of the group III$_b$, the resulting solid solution containing 4 or more kinds of elements has a furthermore increased rate of crystallization, thus increasing the recording speed.

## EXAMPLE 24

Optical recording media having a structure shown in Fig. 1 were prepared, each comprising 1.2 mm-thick acrylic resin substrate (1) having thereon 100 nm-thick inorganic dielectric material layer (2) made of SiO$_2$, 100 nm-thick recording material layer (3) made of Sb-Te-Bi-Se, 100 nm-thick inorganic dielectric material layer (4) made of SiO$_2$, ultraviolet curable acrylic resin adhesive layer (5), and 1.2 mm-thick acrylic resin protective

28

layer (6) in this order.

Recording material layer (3) was formed by sputtering using an RF magnetron and two alloy targets, $Sb_2Te_3$ (crystal structure: C33) and $Bi_2Se_3$ (crystal structure C33) both belonging to the rhombohedoral system, while appropriately controlling the RF power to the respective alloy target so as to synthesize a composition shown in Table 11 below.

Samples 50 and 51 showed absorption in the wavelength region of from visible light to near infrared light and could be used as optical recording media at least in the wavelength region of from 400 nm to 860 nm.

Recording and erasing characteristics when these recording media were used by using a semi-conductor laser having a wavelength of 830 nm as a light source are also shown in Table 11 below.

## TABLE 11

| Sample No. | Composition of Recording Material | Time of Crystall- zation | Stabilityy |
|---|---|---|---|
| 50 | $(Sb_2Te_3)_{85}(Bi_2Se_3)_{15}$ | good | good |
| 51 | $(Sb_2Te_3)_{60}(Bi_2Se_3)_{40}$ | good | good |

As is apparent from Table 11, Samples 50 and 51 according to the present invention have a reduced time of crystallization as compared with Sample 1 of Comparative Example 1, making it possible to conduct recording and erasing of information at a higher speed, and also have a higher crystallization temperature as compared with Sample 2 of Comparative Example 1, indicating improved stability of the amorphous phase.

The recording materials in these samples are composed of a mixture of $Sb_2Te_3$ and $Bi_2Se_3$ both of which have not only the same crystal system (i.e., rhombohedoral system) but the same crystal structure (i.e., C33). The strain in the crystal lattice was therefore extremely small with the free energy of the crystal phase being further reduced so that the time of crystallization required was especially short.

In addition, as expected from the pseudo-binary phase diagram shown in Fig. 34, the recording material of Sample 50 is a congruent solid solution. As a result, the recording material suffers from no local crystallization during cooling while retaining the excellent characteristics even on repetition of rewriting.

## EXAMPLE 25

Optical recording media (Samples 52 and 53) were prepared in the same manner as in Example 24, except that the recording material layer was composed of Sb-Se-Bi-S.

The Sb-Se-Bi-S recording material layer was formed by sputtering using a single target prepared by mixing $Sb_2Se_3$ (crystal structure: D58) and $Bi_2S_3$ (crystal structure: D58), both of which belong to the orthorhombic system, at a ratio of 84:16 (Sample 52) or 65:35 (Sample 53).

Recording and erasion characteristics of the resulting optical recording media are shown in Table 12 below.

## EXAMPLE 26

Optical recording media (Samples 54 and 55) were prepared in the same manner as in Example 24, except that the recording material layer was composed of In-Te-Tℓ-Se.

The In-Te-Tℓ-Se recording material layer was formed by sputtering using two alloy targets of InTe (crystal structure: B37) and TℓSe (crystal structure: B37) both of which belong to the tetragonal system.

Recording and erasing characteristics of the resulting optical recording media are shown in Table 12 below.

## EXAMPLE 27

A optical recording medium (Sample 56) was prepared in the same manner as in Example 24, except that the recording material layer was composed of Pb-Sn-Te.

The Pb-Sn-Te recording material layer was formed by simultaneous binary sputtering using two alloy targets of PbTe (crystal structure: B1) and SnTe (crystal structure: B1) both of which belong to the cubic system.

Recording and erasing characteristics of the resulting optical recording media are shown in Table 12 below.

EXAMPLE 28

A optical recording medium (Sample 57) was prepared in the same manner as in Example 24, except that the recording material layer was composed of In-Ga-Te.

The In-Ga-Te recording material layer was formed by simultaneous binary sputtering using two alloy targets of InSb (crystal structure: B3) and GaSb (crystal structure: B3) both of which belong to the cubic system.

Recording and erasing characteristics of the resulting optical recording media are shown in Table 12 below.

EXAMPLE 29

A optical recording medium (Sample 58) was prepared in the same manner as in Example 24, except that the recording material layer was composed of In-Ge-Te.

The In-Ge-Te recording material layer was formed by simultaneous binary sputtering using two alloy targets of $In_2Te_3$ (crystal structure: B3) and GeTe (crystal structure: B1) both of which belong to the cubic system.

Recording and erasing characteristics of the resulting optical recording media are shown in Table 12 below.

EXAMPLE 30

A optical recording medium (Sample 59) was prepared in the same manner as in Example 24, except that the recording material layer was composed of Sb-Ge-Se.

The Sb-Ge-Se recording material layer was formed by simultaneous binary sputtering using two alloy targets of $Sb_2Se_3$ (crystal structure: D58) and GeSe (crystal structure: B29) both of which belong to the orthorhombic system.

Recording and erasing characteristics of the resulting optical recording media are shown in Table 12 below.

EXAMPLE 31

A optical recording medium (Sample 60) was prepared in the same manner as in Example 24, except that the recording material layer was composed of Bi-Te-S-Se.

The Bi-Te-S-Se recording material layer was formed by simultaneous binary sputtering using two alloy targets of $Bi_2Te_2S$ (crystal structure: C33) and $Bi_2Se_3$ (crystal structure: C33) both of which belong to the rhombohedral system.

Recording and erasing characteristics of the resulting optical recording media are shown in Table 12 below.

EXAMPLE 32

A optical recording medium (Sample 61) was prepared in the same manner as in Example 24, except that the recording material layer was composed of Sb-Te-Bi-Se.

The Sb-Te-Bi-Se recording material layer was formed by simultaneous ternary sputtering using three alloy targets of $Sb_2Te_3$ (crystal structure: C33), $Bi_2Te_3$ (crystal structure: C33), and $Bi_2Se_3$ (crystal structure: C33) all of which belong to the rhombohedral system.

Recording and erasing characteristics of the resulting optical recording media are shown in Table 12 below.

## TABLE 12

| Example No. | Sample No. | Composition of Recording Material | Time of Crystall- zation | Stability |
|---|---|---|---|---|
| 25 | 52 | $(Sb_2Se_3)_{84}(Bi_2S_3)_{16}$ | good | good |
| | 53 | $(Sb_2Se_3)_{65}(Bi_2S_3)_{35}$ | good | good |
| 26 | 54 | $(InTe)_{52}(T\ell Se)_{48}$ | good | good |
| | 55 | $(InTe)_{80}(T\ell Se)_{20}$ | good | good |
| 27 | 56 | $(PbTe)_{30}(SnTe)_{70}$ | good | good |
| 28 | 57 | $(InSb)_{80}(GaSb)_{20}$ | good | good |
| 29 | 58 | $(In_2Te_3)_{95}(GeTe)_5$ | good | good |
| 30 | 59 | $(Sb_2Se_3)_{95}(GeSe)_5$ | good | good |
| 31 | 60 | $(Bi_2Te_2S)_{25}(Bi_2Se_3)_{75}$ | good | good |
| 32 | 61 | $(Sb_2Te_3)_{85}(Bi_2Te_3)_{10}(Bi_2Se_3)_5$ | good | good |

As is apparent from Table 12, Samples 52 to 61 according to the present invention have a reduced time of crystallization, making it possible to conduct recording and erasing of information at a higher speed, and also have a higher crystallization temperature, an indication of improved stability of the amorphous phase, as compared with Comparative Example 1, similarly to Samples 50 to 51 of Example 24.

In particular, the recording materials in Examples 24 to 28 and 31 to 32 were those synthesized from a mixture of stoichiometric compounds which are the same not only in crystal system but in crystal structure. As a result, the strain in the crystal lattice in these materials is extremely small to further reduce the free energy of the crystal phase, to thereby achieve marked reduction in crystallization time.

Since each of the recording materials of Samples 52 and 54 is composed of a congruent solid solution as expected from the respective pseudo-binary phase diagram shown in Fig. 35 to 36, they do not suffer from segregation during cooling and retain satisfactory characteristics even on repetition of rewriting.

It is apparent from Examples 24 to 32 that use of recording material (vi) according to the present invention increases stability of the recording material layer in its amorphous phase and reduces the time of crystallization of the recording material layer. The optical recording media using recording material (vi) are thus capable of rewriting at a high speed and maintaining recorded information for an extended period of time.

Because recording material (vi) shows absorption of visible and near infrared light due to the presence of at least one of Se and Te, widespread light sources inclusive of semiconductor lasers can be applied to these materials.

Where the above-described elements or stoichiometric compounds having the same crystal system also have the same crystal structure according to classification by strukturbericht, the recording material composed of such elements or stoichiometric compounds has an extremely small strain in its crystal lattice, and the free energy of the crystal phase is further reduced, which leads to further reduction of the crystallization time.

In addition, where the solid solution constituting recording material (vi) is a congruent solid solution, segregation does not take place during cooling so that unchangeability of the recording and erasing characteristics on repeated use is further ensured.

## Claims

1. An optical recording medium comprising a substrate having provided thereon a layer of a recording material whose optical properties reversibly change on application of light or heat, to conduct recording, reproduction, or erasing of information, wherein said recording material is one of:

(i) a recording material having a composition corresponding to a mixture of (i-a) a congruent compound having a composition corresponding to a mixture of (i-a-1) a $IV_bVI_b$ type stoichiometric compound composed of the group $IV_b$ element selected from Sn and Pb and the group $VI_b$ element selected from S, Se and Te and represented by chemical formula $IV_bVI_b$ and (i-a-2) a $V_{b2}VI_{b3}$ type stoichiometric compound composed of the group $V_b$ element selected from Sb, Bi, and As and the group $VI_b$ element selected from S, Se, and Te and represented by chemical formula $V_{b2}VI_{b3}$ and (i-b) the above-described $V_{b2}VI_{b3}$ type stoichiometric compound, said composition containing at least one of Se and Te,

(ii) a recording material having a composition corresponding to a mixture of (ii-a) a $I_2VI_b$ type stoichiometric compound composed of the group I element selected from Li, Na, K, Rb, Cs, Cu, Ag and Au and the group $VI_b$ element selected from S, Se, and Te and represented by chemical formula $I_2VI_b$ and (ii-b) a stoichiometric compound composed of elements selected from at least two groups of the group $V_b$ consisting of As, Sb, and Bi, and the group $VI_b$ consisting of S, Se, and Te, said composition containing at least of of Se and Te, wherein the crystal phase of said recording material (ii) is a single phase composed of a stoichiometric compound and said stoichiometric compound is a congruent compound;

(iii) a recording material having a composition corresponding to a mixture of (iii-a) a $III_bVI_b$ type stoichiometric compound composed of the group $III_b$ element selected from Ga, In, and Tl and the group $VI_b$ element selected from S, Se, and Te and represented by chemical formula $III_bVI_b$ and (iii-b) a stoichiometric compound composed of elements selected from at least two groups of the group $III_b$ consisting of Ga, In, and Tl, the group $IV_b$ consisting of Ge, Sn, and Pb, the group $V_b$ consisting of As, Sb, and Bi, and the group $VI_b$ consisting of S, Se, and Te, said composition containing three or more kinds of elements and containing at least one of Se and Te, wherein the crystal phase of said recording material (iii) is a single phase composed of a stoichiometric compound and said stoichiometric compound is a congruent compound;

(iv) a recording material having a composition corresponding to a mixture of (iv-a) a $III_{b2}VI_{b3}$ type stoichiometric compound composed of the group $III_b$ element selected from Ga, In, and Tl and the group $VI_b$ element selected from S, Se, and Te and represented by chemical formula $III_{b2}VI_{b3}$ and (iv-b) a stoichiometric compound composed of elements selected from at least two groups of the group $III_b$ consisting of Ga, In, and Tl, the group $IV_b$ consisting of Ge, Sn, and Pb, and the group $VI_b$ consisting of S, Se, and Te, said composition containing three or more kinds of elements and containing at least one of Se and Te,

(v-1) a recording material made of a solid solution containing four or more kinds of elements at least one of which is Se or Te and having a crystal structure of a stoichiometric three-element compound having a composition corresponding to a mixture of (v-1-a) a $IV_bVI_b$ type stoichiometric compound composed of the group $IV_b$ element selected from Sn and Pb and the group $VI_b$ element selected from S, Se, and Te and represented by chemical formula $IV_bVI_b$ and (v-1-b) a $V_{b2}VI_{b3}$ type stoichiometric compound composed of the group $V_b$ element selected from Sb, Bi, and As and the group $VI_b$ element selected from S, Se and Te and represented by chemical formula $V_{b2}VI_{b3}$, in which at least one of the three constituent elements of said stoichiometric three-element compound is partly substituted by at least one element selected from the group consisting of the above-described elements of the groups $IV_b$, $V_b$, and $VI_b$ and Si and Ge of the group $IV_b$,

(v-2) a recording material made of a solid solution containing four or more kinds of elements at least one of which is Se or Te and having a crystal structure of a stoichiometric three-element compound having a composition corresponding to a mixture of (v-2-a) a $I_2VI_b$ type stoichiometric compound composed of the group I element selected from Li, Na, K, Rb, Cs, Cu, Ag, and Au and the group $VI_b$ element selected from S, Se, and Te and represented by chemical formula $I_2VI_b$ and (v-2-b) a $V_{b2}VI_{b3}$ type stoichiometric compound composed of the group $V_b$ element selected from As, Sb, and Bi and the group $VI_b$ element selected from S, Se, and Te and represented by chemical formula $V_{b2}VI_{b3}$, in which at least one of the three constituent elements of said stoichiometric three-element compound is partly substituted by at least one element selected from the above-described elements of the groups I, $V_b$, and $VI_b$,

(v-3) a recording material made of a solid solution containing four or more kinds of elements at least one of which is Se or Te and having a crystal structure of a stoichiometric three-element compound having a composition corresponding to a mixture of (v-3-a) a $I_2VI_b$ type stoichiometric compound composed of the group I element selected from Li, Na, K, Rb, Cs, Cu, Ag, and Au and the group $VI_b$ element selected from S, Se, and Te and represented by chemical formula $I_2VI_b$ and (v-3-b) a $IV_bVI_{b2}$ type stoichiometric compound composed of the group $IV_b$ element selected from Ge, Sn, and Pb and the group $VI_b$ element selected from S, Se, and Te and represented by chemical formula $IV_bVI_{b2}$,

EP 0 387 898 B1

in which at least one of the three constituent elements of said three-element compound is partly substituted by at least one element selected from the group consisting of the above described elements of the groups I, $IV_b$, and $VI_b$ and Si of the group $IV_b$,

(v-4) a recording material made of a solid solution containing four or more kinds of elements at least one of which is Se or Te and having a crystal structure of a stoichiometric three-element compound having a composition corresponding to a mixture of (v-4-a) a $III_b VI_b$ type stoichiometric compound composed of the group $III_b$ element selected from Ga, In, and Tl and the group $VI_b$ element selected from S, Se, and Te and represented by chemical formula $III_b VI_b$ and (v-4-b) a $IV_b VI_b$ type stoichiometric compound composed of the group $IV_b$ element selected from Ge, Sn, and Pb and the group $VI_b$ element selected from S, Se, and Te and represented by chemical formula $IV_b VI_b$, in which at least one of the three constituent elements of said three-element compound is partly substituted by at least one element selected from the group consisting of the above described elements of the groups $III_b$, $IV_b$, and $VI_b$, Al of the group $III_b$, and Si of the group $IV_b$,

(v-5) a recording material made of a solid solution containing four or more kinds of elements at least one of which is Se or Te and having a crystal structure of a stoichiometric three-element compound having a composition corresponding to a mixture of (v-5-a) a $III_b VI_b$ type stoichiometric compound composed of the group $III_b$ element selected from Ga, In, and Tl and the group $VI_b$ element selected from S, Se, and Te and represented by chemical formula $III_b VI_b$ and (v-5-b) a $IV_b VI_{b2}$ type stoichiometric compound composed of the group $IV_b$ element selected from Ge, Sn, and Pb and the group $VI_b$ element selected from S, Se, and Te and represented by chemical formula $IV_b VI_{b2}$, in which at least one of the three constituent elements of said three-element compound is partly substituted by at least one element selected from the group consisting of the above described elements of the groups $III_b$, $IV_b$, and $VI_b$, Al of the group $III_b$, and Si of the group $IV_b$,

(v-6) a recording material made of a solid solution containing four or more kinds of elements at least one of which is Se or Te and having a crystal structure of a stoichiometric three-element compound having a composition corresponding to a mixture of two kinds of a $III_b VI_b$ type stoichiometric compound composed of the group $III_b$ element selected from Ga, In, and Tl and the group $VI_b$ element selected from S, Se, and Te and represented by chemical formula $III_b VI_b$, in which at least one of the three constituent elements of said three-element compound is partly substituted by at least one element selected from the group consisting of the above described elements of the groups $III_b$ and $VI_b$ and Al of the group $III_b$,

(v-7) a recording material made of a solid solution containing four or more kinds of elements at least one of which is Se or Te and having a crystal structure of a stoichiometric three-element compound having a composition corresponding to a mixture of two kinds of a $III_{b2} VI_{b3}$ type stoichiometric compound composed of the group $III_b$ element selected from Ga, In, and Tl and the group $VI_b$ element selected from S, Se, and Te and represented by chemical formula $III_{b2} VI_{b3}$, in which at least one of the three constituent elements of said three-element compound is partly substituted by at least one element selected from the group consisting of the above described elements of the groups $III_b$ and $VI_b$ and Al of the group $III_b$,

(v-8) a recording material made of a solid solution containing four or more kinds of elements at least one of which is Se or Te and having a crystal structure of a stoichiometric three-element compound having a composition corresponding to a mixture of (v-8-a) a $III_{b2} VI_{b3}$ type stoichiometric compound composed of the group $III_b$ element selected from Ga, In, and Tl and the group $VI_b$ element selected from S, Se, and Te and represented by chemical formula $III_{b2} VI_{b3}$ and (v-8-b) a $IV_b VI_b$ type stoichiometric compound composed of the group $IV_b$ element selected from Ge, Sn, and Pb and the group $VI_b$ element selected from S, Se, and Te and represented by chemical formula $IV_b VI_b$, in which at least one of the three constituent elements of said three-element compound is partly substituted by at least one element selected from the group consisting of the above described elements of the groups $III_b$, $IV_b$, and $VI_b$, Al of the group $III_b$, and Si of the group $IV_b$, and

(vi) a recording material made of a solid solution composed of at least three elements selected from the group consisting of the group $III_b$ element selected from Ga, In, and Tl, the group $IV_b$ element selected from Ge, Sn, and Pb, the group $V_b$ element selected from As, Sb, and Bi, and the group $VI_b$ element selected from S, Se and Te and containing at least one of Se and Te, said solid solution being synthesized from plural elements or stoichiometric compounds having the same crystal system, wherein said solid solution is a congruent solid solution.

2. An optical recording medium as claimed in claim 1, wherein said recording material is the recording material (i).

33

3. An optical recording medium as claimed in claim 2, wherein the crystal phase of said recording material (i) is a single phase composed of a stoichiometric compound.

4. An optical recording medium as claimed in claim 3, wherein said stoichiometric compound is a congruent compound.

5. An optical recording medium as claimed in claim 1, wherein said stoichiometric compound (ii-b) is a $V_{b2}VI_{b3}$ type stoichiometric compound.

6. An optical recording medium as claimed in claim 1, wherein said multiple stoichiometric compound (ii-b) is a $III_{b2}VI_{b3}$ type stoichiometric compound.

7. An optical recording medium as claimed in claim 1, wherein said multiple stoichiometric compound (ii-b) is a $IV_bVI_{b2}$ type stoichiometric compound.

8. An optical recording medium as claimed in claim 1, wherein said stoichiometric compound (iii-b) is a $IV_bVI_b$ type stoichiometric compound.

9. An optical recording medium as claimed in claim 1, wherein said stoichiometric compound (iii-b) is a $IV_b$-$VI_{b2}$ type stoichiometric compound.

10. An optical recording medium as claimed in claim 1, wherein said stoichiometric compound (iii-b) is a $III_bVI_b$ type stoichiometric compound.

11. An optical recording medium as claimed in claim 1, wherein said recording material is the recording material (iv).

12. An optical recording medium as claimed in claim 11, wherein said stoichiometric compound (iv-b) is a $III_{b2}VI_{b3}$ type stoichiometric compound.

13. An optical recording medium as claimed in claim 11, wherein said stoichiometric compound (iv-b) is a $IV_b$-$VI_b$ type stoichiometric compound.

14. An optical recording medium as claimed in claim 1, wherein the crystal phase of the recording material (iv) is a single phase composed of a stoichiometric compound.

15. An optical recording medium as claimed in claim 14, wherein said stoichiometric compound is a congruent compound.

16. An optical recording medium as claimed in claim 1, wherein said recording material is the recording material (v-1).

17. An optical recording medium as claimed in claim 1, wherein said recording material is the recording material (v-2).

18. An optical recording medium as claimed in claim 1, wherein said recording material is the recording material (v-3).

19. An optical recording medium as claimed in claim 1, wherein said recording material is the recording material (v-4).

20. An optical recording medium as claimed in claim 1, wherein said recording material is the recording material (v-5).

21. An optical recording medium as claimed in claim 1, wherein said recording material is the recording material (v-6).

22. An optical recording medium as claimed in claim 1, wherein said recording material is the recording ma-

34

terial (v-7).

23. An optical recording medium as claimed in claim 1, wherein said recording material is the recording material (v-8).

24. An optical recording medium as claimed in claims 16 to 23, wherein at least one of the three constituent elements of said stoichiometric three-element compound which is partly substituted and at least one element which substitutes for said constituent element(s) are in the mutual relationship that they can form a solid solution regardless of the mixing ratio of the former element to the latter element.

25. An optical recording medium as claimed in claims 19 to 23, wherein at least one element which substitutes for at least one of the three constituent elements of said stoichiometric three-element compound is Tl of the group $III_b$.

26. An optical recording medium as claimed in claim 1, wherein said elements or stoichiometric compounds having the same crystal system have the same crystal structure according to the classification by strukturbericht.

27. An optical recording medium as claimed in claim 26, wherein said solid solution is a congruent solid solution.


**Patentansprüche**

1. Ein optisches Aufzeichnungsmedium, umfassend ein Substrat mit einer darauf vorgesehenen Schicht eines Aufzeichnungsmaterials, dessen optische Eigenschaften sich reversibel bei der Einwirkung von Licht oder Wärme ändern, zum Aufzeichnen, Wiedergeben oder Löschen von Informationen, wobei es sich bei dem Aufzeichnungsmaterial um eins der folgenden Materialien handelt:
   (i) ein Aufzeichnungsmaterial mit einer Zusammensetzung, die eine Mischung ist aus
      (i-a) einer kongruenten Verbindung mit einer Zusammensetzung entsprechend einer Mischung von
      (i-a-1) einer stöchiometrischen Verbindung vom Typ $IV_bVI_b$ aus einem Element der Gruppe $IV_b$, ausgewählt unter Sn und Pb, und einem Element der Gruppe $VI_b$, ausgewählt unter S, Se und Te, und wiedergegeben durch die chemische Formel $IV_bVI_b$ und
      (i-a-2) einer stöchiometrischen Verbindung vom Typ $V_{b2}VI_{b3}$ aus einem Element der Gruppe $V_b$, ausgewählt aus Sb, Bi und As, und einem Element der Gruppe $VI_b$, ausgewählt aus S, Se und Te, und wiedergegeben durch die chemische Formel $V_{b2}VI_{b3}$ und
      (i-b) der genannten stöchiometrischen Verbindung vom Typ $V_{b2}VI_{b3}$, wobei die Zusammensetzung mindestens eins der Elemente Se und Te enthält;
   (ii) ein Aufzeichnungsmaterial mit einer Zusammensetzung entsprechend einer Mischung aus
      (ii-a) einer stöchiometrischen Verbindung vom Typ $I_2VI_b$ aus einem Element der Gruppe I, ausgewählt aus Li, Na, K, Rb, Cs, Cu, Ag und Au, und einem Element der Gruppe $VI_b$, ausgewählt aus S, Se und Te, und wiedergegeben durch die chemische Formel $I_2VI_b$ und
      (ii-b) einer stöchiometrischen Verbindung aus Elementen, ausgewählt unter mindestens zsdwei Gruppen der Gruppe $V_b$, bestehend aus As, Sb und Bi und der Gruppe $VI_b$, bestehend aus S, Se und Te, wobei die Zusammensetzung mindestens ein Element von Se und Te enthält, wobei die Kristallphase des Aufzeichnungsmaterials (ii) eine Einphase einer stöchiometrischen Verbindung und die stöchiometrische Verbindung einer kongruente Verbindung ist;
   (iii) ein Aufzeichnungsmaterial mit einer Zusammensetzung, entsprechend einer Mischung von
      (iii-a) einer stöchiometrischen Verbindung vom Typ $III_bVI_b$, bestehend aus einem Element der Gruppe $III_b$, ausgewählt aus Ga, In und Tl, und einem Element der Gruppe $VI_b$, ausgewählt aus S, Se und Te, und wiedergegeben durch die chemische Formel $III_bVI_b$ und
      (iii-b) einer stöchiometrischen Verbindung aus Elementen, ausgewählt aus mindestens zwei Gruppen der Gruppe $III_b$, bestehend aus Ga, In und Tl, der Gruppe $IV_b$, bestehend aus Ge, Sn und Pb, der Gruppe $V_b$, bestehend aus As, Sb und Bi, und der Gruppe $VI_b$, bestehend aus S, Se und Te, wobei die Zusammensetzung drei oder mehr Elemente enthält und mindestens ein Element von Se und Te enthält, wobei die Kristallphase des Aufzeichnungsmaterials (iii) eine Einphase aus einer stöchiometrischen Verbindung ist und die stöchiometrische Verbindung eine kongruente Verbindung ist;

(iv) ein Aufzeichnungsmaterial mit einer Zusammensetzung, entsprechend einer Mischung aus

(iv-a) einer stöchiometrischen Verbindung vom Typ $III_{b2}VI_{b3}$, bestehend aus einem Element $III_b$, ausgewählt aus Ga, In und Tl, und einem Element der Gruppe $VI_b$, ausgewählt aus S, Se und Te und wiedergegeben durch die chemische Formel $III_{b2}VI_{b3}$, und

(iv-b) einer stöchiometrischen Verbindung, zusammengesetzt aus Elementen, ausgewählt aus mindestens zwei Gruppen der Gruppe $III_b$, bestehend aus Ga, In und Tl, der Gruppe $IV_b$, bestehend aus Ge, Sn und Pb und der Gruppe $VI_b$, bestehend aus S, Se und Te, wobei die Zusammensetzung drei oder mehr Elemente enthält und mindestens ein Element von Se und Te enthält;

(v-1) ein Aufzeichnungsmaterial, gebildet aus einer festen Lösung mit einem Gehalt an vier oder mehr Elementen, von denen mindestens eins Se oder Te ist, und mit einer Kristallstruktur einer stöchiometrischen Drei-Elemente-Verbindung mit einer Zusammensetzung, entsprechend einer Mischung von

(v-1-a) einer stöchiometrischen Verbindung vom Typ $IV_bVI_b$ eines Elements der Gruppe $IV_b$, ausgewählt aus Sn und Pb und einem Element der Gruppe $VI_b$, ausgewählt aus S, Se und Te, und wiedergegeben durch die chemische Formel $IV_bVI_b$ und

(v-1-b) einer stöchiometrischen Verbindung vom Typ $V_{b2}VI_{b3}$, zusammengesetzt aus einem Element der Gruppe $V_b$, ausgewählt aus Sb, Bi und As, und einem Element der Gruppe $VI_b$, ausgewählt aus S, Se und Te und wiedergegeben durch die chemische Formel $V_{b2}VI_{b3}$, in der mindestens eines der drei Elemente, die die stöchiometrische Drei-Elemente-Verbindung bilden, teilweise durch mindestens ein Element substituiert ist, ausgewählt aus der Gruppe der zuvor genannten Elemente der Gruppen $IV_b$, $V_b$ und $VI_b$ und Si und Ge der Gruppe $IV_b$;

(v-2) ein Aufzeichnungsmaterial, gebildet aus einer festen Lösung mit einem Gehalt an vier oder mehr Elementen, von denen mindestens eins Se oder Te ist, und mit einer Kristallstruktur einer stöchiometrischen Drei-Elemente-Verbindung mit einer Zusammensetzung entsprechend einer Mischung

(v-2-a) einer stöchiometrischen Verbindung vom Typ $I_2VI_b$, zusammengesetzt aus einem Element der Gruppe I, ausgewählt von Li, Na, K, Rb, Cs, Cu, Ag und Au, und einem Element der Gruppe $VI_b$, ausgewählt aus S, Se und Te, und wiedergegeben durch die chemische Formel $I_2VI_b$ und

(v-2-b) einer stöchiometrischen Verbindung vom Typ $V_{b2}VI_{b3}$, zusammengesetzt aus einem Element der Gruppe $V_b$, ausgewählt aus As, Sb und Bi, und einem Element der Gruppe $VI_b$, ausgewählt aus S, Se und Te, und wiedergegeben durch die chemische Formel $V_{b2}VI_{b3}$, worin mindestens eins der drei Elemente, die die stöchiometrische Drei-Elemente-Verbindung bilden, teilweise durch mindestens eins der Elemente substituiert ist, ausgewählt unter den zuvor genannten Elementen der Gruppen I, $V_b$ und $VI_b$;

(v-3) ein Aufzeichnungsmaterial, gebildet aus einer festen Lösung mit einem Gehalt an vier oder mehr Elementen, wobei mindestens eins Se oder Te ist, und mit einer Kristallstruktur einer stöchiometrischen Drei-Elemente-Verbindung mit einer Zusammensetzung, entsprechend einer Mischung

(v-3-a) einer stöchiometrischen Verbindung vom Typ $I_2VI_b$, zusammengesetzt aus einem Element der Gruppe I, ausgewählt aus Li, Na, K, Rb, Cs, Cu, Ag und Au, und einem Element der Gruppe $VI_b$, ausgewählt aus S, Se und Te, und wiedergegeben durch die chemische Formel $I_2$ und $VI_b$ und

(v-3-b) einer stöchiometrischen Verbindung vom Typ $IV_bVI_{b2}$, zusammengesetzt aus einem Element der Gruppe $IV_b$, ausgewählt aus Ge, Sn und Pb, und einem Element der Gruppe $VI_b$, ausgewählt aus S, Se und Te, und wiedergegeben durch die chemische Formel $IV_bVI_{b2}$, wobei mindestens eins der drei Elemente, die die Drei-Elemente-Verbindung bilden, teilweise durch mindestens ein Element ersetzt ist, ausgewählt aus der Gruppe, die aus den zuvor genannten Elementen der Gruppen I, $IV_b$ und $VI_b$ und Si der Gruppe $IV_b$ besteht;

(v-4) ein Aufzeichnungsmaterial, gebildet aus einer festen Lösung, enthaltend vier oder mehr Elemente, von denen mindestens eins Se oder Te ist, und mit einer Kristallstruktur einer stöchiometrischen Drei-Elemente-Verbindung mit einer Zusammensetzung entsprechend einer Mischung

(v-4-a) einer stöchiometrischen vom Typ $III_bVI_b$, zusammengesetzt aus einem Element der Gruppe $III_b$, ausgewählt aus Ga, In und Tl, und einem Element der Gruppe $VI_b$, ausgewählt aus S, Se und Te, und wiedergegeben durch die chemische Formel $III_bVI_b$ und

(v-4-b) einer stöchiometrischen Verbindung vom Typ $IV_bVI_b$, zusammengesetzt aus einem Element der Gruppe $IV_b$, ausgewählt aus Ge, Sn und Pb und einem Element der Gruppe $VI_b$, ausgewählt aus S, Se und Te und wiedergegeben durch die chemische Formel $IV_bVI_b$, wobei mindestens eins der drei Elemente, die die Drei-Elemente-Verbindung bilden, teilweise durch mindestens ein Element substituiert ist, ausgewählt aus der Gruppe, bestehend aus den zuvor genannten Elementen der Gruppen $III_b$, $IV_b$ und $VI_b$, Al der Gruppe $III_b$ und Si der Gruppe $IV_b$;

(v-5) ein Aufzeichnungsmaterial, gebildet aus einer festen Lösung mit einem Gehalt an vier oder mehr Elementen, von denen mindestens eins Se oder Te ist, und mit einer Kristallstruktur einer stöchiometrischen Drei-Elemente-Verbindung mit einer Zusammensetzung, entsprechend einer Mischung aus

(v-5-a) einer stöchiometrischen Verbindung vom Typ $III_bVI_b$, zusammengesetzt aus einem Element der Gruppe $III_b$, ausgewählt aus Ga, In und Tl, und einem Element der Gruppe $VI_b$, ausgewählt aus S, Se und Te, und wiedergegeben durch die chemische Formel $III_bVI_b$ und

(v-5-b) einer stöchiometrischen Verbindung vom Typ $IV_bVI_{b2}$, zusammengesetzt aus einem Element der Gruppe $IV_b$, ausgewählt aus Ge, Sn und Pb, und einem Element der Gruppe $VI_b$, ausgewählt aus S, Se und Te, und wiedergegeben durch die chemische Formel $IV_bVI_{b2}$, wobei mindestens eins der drei Elemente, die die Drei-Elemente-Verbindung bilden, teilweise durch mindestens ein Element ersetzt ist, ausgewählt aus der Gruppe, bestehend aus den zuvor genannten Elementen der Gruppen $III_b$, $IV_b$ und $VI_b$, Al der Gruppe $III_b$ und Si der Gruppe $IV_b$;

(v-6) ein Aufzeichnungsmaterial, gebildet aus einer festen Lösung mit einem Gehalt an vier oder mehr Elementen, von denen mindestens eins Se oder Te ist, und mit einer Kristallstruktur einer stöchiometrischen Drei-Elemente-Verbindung mit einer Zusammensetzung, entsprechend einer Mischung von zwei stöchiometrischen Verbindungen vom Typ $III_bVI_b$, zusammengesetzt aus einem Element der Gruppe $III_b$, ausgewählt aus Ga, In und Tl, und einem Element der Gruppe $VI_b$, ausgewählt aus S, Se und Te, und wiedergegeben durch die chemische Formel $III_bVI_b$, wobei mindestens eins der drei Elemente, die die Drei-Elemente-Verbindung bilden, teilweise durch mindestens ein Element ersetzt ist, ausgewählt aus der Gruppe, bestehend aus den zuvor genannten Elementen der Gruppen $III_b$ und $VI_b$ und Al der Gruppe $III_b$;

(v-7) ein Aufzeichnungsmaterial, gebildet aus einer festen Lösung, enthaltend vier oder mehr Elemente, von denen mindestens eins Se oder Te ist, und mit einer Kristallstruktur einer stöchiometrischen Drei-Elemente-Verbindung mit einer Zusammensetzung, entsprechend einer Mischung aus zwei Arten einer stöchiometrischen Verbindung vom Typ $III_{b2}VI_{b3}$, zusammengesetzt aus einem Element der Gruppe $III_b$, ausgewählt aus Ga, In und Tl, und einem Element der Gruppe $VI_b$, ausgewählt aus S, Se und Te, und wiedergegeben durch die chemische Formel $III_{b2}VI_{b3}$, wobei mindestens eins der drei Elemente, die die Drei-Elemente-Verbindung bilden, teilweise durch mindestens ein Element substituiert ist, ausgewählt aus der Gruppe, bestehend aus den zuvor genannten Elementen der Gruppen $III_b$ und $VI_b$ und Al der Gruppe $III_b$;

(v-8) ein Aufzeichnungsmaterial, gebildet aus einer festen Lösung mit einem Gehalt an vier oder mehr Elementen, bei denen mindestens eins Se oder Te ist und mit einer Kristallstruktur einer stöchiometrischen Drei-Elemente-Verbindung mit einer Zusammensetzung, entsprechend einer Mischung

(v-8-a) einer stöchiometrischen Verbindung vom Typ $III_{b2}VI_{b3}$, zusammengesetzt aus einem Element der Gruppe $III_b$, ausgewählt aus Ga, In und Tl, und einem Element der Gruppe $VI_b$, ausgewählt aus S, Se und Te, und wiedergegeben durch die chemische Formel $III_{b2}VI_{b3}$ und

(v-8-b) einer stöchiometrischen Verbindung vom Typ $IV_bVI_b$, zusammengesetzt aus einem Element der Gruppe $IV_b$, ausgewählt aus Ge, Sn und Pb, und einem Element der Gruppe $VI_b$, ausgewählt aus S, Se und Te, und wiedergegeben durch die chemische Formel $IV_bVI_b$, wobei mindestens eins der drei Elemente, die die Drei-Elemente-Verbindung bilden, teilweise durch mindestens ein Element substituiert ist, ausgewählt aus der Gruppe, bestehend aus den zuvor angeführten Elementen der Gruppen $III_b$, $IV_b$ und $VI_b$, Al der Gruppe $III_b$ und Si der Gruppe $IV_b$; und

(vi) ein Aufzeichnungsmaterial, gebildet aus einer festen Lösung, zusammengesetzt aus mindestens drei Elementen, ausgewählt aus der Gruppe, bestehend aus einem Element der Gruppe $III_b$, ausgewählt aus Ga, In und Tl, und einem Element der Gruppe $IV_b$, ausgewählt aus Ge, Sn und Pb, einem Element der Gruppe $V_b$, ausgewählt aus As, Sb und Bi, und einem Element der Gruppe $VI_b$, ausgewählt aus S, Se und Te, und mit einem Gehalt an mindestens einem der Elemente Se und Te, wobei die feste Lösung aus mehreren Elementen oder aus stöchiometrischen Verbindungen mit demselben Kristallsystem synthetisiert worden ist, wobei die feste Lösung eine kongruente feste Lösung ist.

2. Ein optisches Aufzeichnungsmedium nach Anspruch 1, wobei das Aufzeichnungsmaterial das Aufzeichnungsmaterial (i) ist.

3. Ein optisches Aufzeichnungsmedium nach Anspruch 2, wobei die Kristallphase des Aufzeichnungsmaterials (i) eine Einphase aus einer stöchiometrischen Verbindung ist.

4. Ein optisches Aufzeichnungsmedium nach Anspruch 3, wobei die stöchiometrische Verbindung eine kongruente Verbindung ist.

5. Ein optisches Aufzeichnungsmedium nach Anspruch 1, wobei die stöchiometrische Verbindung (ii-b) eine stöchiometrische Verbindung vom Typ $V_{b2}VI_{b3}$ ist.

6. Ein optisches Aufzeichnungsmedium nach Anspruch 1, wobei die stöchiometrische Mehrfachverbindung (ii-b) eine stöchiometrische Verbindung vom Typ $III_{b2}VI_{b3}$ ist.

7. Ein optisches Aufzeichnungsmedium nach Anspruch 1, wobei die stöchiometrische Mehrfachverbindung (ii-b) eine stöchiometrische Verbindung vom Typ $IV_bVI_{b2}$ ist.

8. Ein optisches Aufzeichnungsmedium nach Anspruch 1, wobei die stöchiometrische Verbindung (iii-b) eine stöchiometrische Verbindung vom Typ $IV_bVI_b$ ist.

9. Ein optisches Aufzeichnungsmedium nach Anspruch 1, wobei die stöchiometrische Verbindung (iii-b) eine stöchiometrische Verbindung vom Typ $IV_bVI_{b2}$ ist.

10. Ein optisches Aufzeichnungsmedium nach Anspruch 1, wobei die stöchiometrische Verbindung (iii-b) eine stöchiometrische Verbindung vom Typ $III_bVI_b$ ist.

11. Ein optisches Aufzeichnungsmedium nach Anspruch 1, wobei das Aufzeichnungsmaterial das Aufzeichnungsmaterial (iv) ist.

12. Ein optisches Aufzeichnungsmedium nach Anspruch 11, wobei die stöchiometrische Verbindung (iv-b) eine stöchiometrische Verbindung vom Typ $III_{b2}VI_{b3}$ ist.

13. Ein optisches Aufzeichnungsmedium nach Anspruch 11, wobei die stöchiometrische Verbindung (iv-b) eine stöchiometrische Verbindung vom Typ $IV_bVI_b$ ist.

14. Ein optisches Aufzeichnungsmedium nach Anspruch 1, wobei die Kristallphase des Aufzeichnungsmaterials (iv) eine Einphase aus einer stöchiometrischen Verbindung ist.

15. Ein optisches Aufzeichnungsmedium nach Anspruch 14, wobei die stöchiometrische Verbindung eine kongruente Verbindung ist.

16. Ein optisches Aufzeichnungsmedium nach Anspruch 1, wobei das Aufzeichnungsmaterial das Aufzeichnungsmaterial (v-1) ist.

17. Ein optisches Aufzeichnungsmedium nach Anspruch 1, wobei das Aufzeichnungsmaterial das Aufzeichnungsmaterial (v-2) ist.

18. Ein optisches Aufzeichnungsmedium nach Anspruch 1, wobei das Aufzeichnungsmaterial das Aufzeichnungsmaterial (v-3) ist.

19. Ein optisches Aufzeichnungsmedium nach Anspruch 1, wobei das Aufzeichnungsmaterial das Aufzeichnungsmaterial (v-4) ist.

20. Ein optisches Aufzeichnungsmedium nach Anspruch 1, wobei das Aufzeichnungsmaterial das Aufzeichnungsmaterial (v-5) ist.

21. Ein optisches Aufzeichnungsmedium nach Anspruch 1, wobei das Aufzeichnungsmaterial das Aufzeichnungsmaterial (v-6) ist.

22. Ein optisches Aufzeichnungsmedium nach Anspruch 1, wobei das Aufzeichnungsmaterial das Aufzeichnungsmaterial (v-7) ist.

23. Ein optisches Aufzeichnungsmedium nach Anspruch 1, wobei das Aufzeichnungsmaterial das Aufzeichnungsmaterial (v-8) ist.

24. Ein optisches Aufzeichnungsmedium nach einem der Ansprüche 16 bis 23, wobei mindestens eins der drei Elemente, die die stöchiometrische Drei-Elemente-Verbindung bilden, die teilweise substituiert ist, und mindestens eins der Elemente, das das genannte Element (die genannten Elemente) substituiert, in einem Verhältnis stehen, daß sie eine feste Lösung bilden, unabhängig vom Mischverhältnis des zuerst angeführten Elements zu dem später angeführten Element.

**25.** Ein optisches Aufzeichnungsmedium nach einem der Ansprüche 19 bis 23, wobei mindestens eins der Elemente, das mindestens eins der drei Elemente substituiert, die die stöchiometrische Drei-Elemente-Verbindung bilden, Tl der Gruppe III$_b$ ist.

**26.** Ein optisches Aufzeichnungsmedium nach Anspruch 1, wobei die Elemente oder die stöchiometrischen Verbindungen, die dasselbe Kristallsystem besitzen, dieselbe Kristallstruktur nach der Strukturbericht-Klassifikation besitzen.

**27.** Ein optisches Aufzeichnungsmedium nach Anspruch 26, wobei die feste Lösung eine kongruente feste Lösung ist.

## Revendications

**1.** Support d'enregistrement optique comprenant un substrat portant une couche d'un matériau d'enregistrement dont les propriétés optiques sont modifiées de manière réversible par application de lumière ou de chaleur pour effectuer l'enregistrement, la reproduction ou l'effacement d'informations, dans lequel ledit matériau d'enregistrement est choisi parmi :

(i) un matériau d'enregistrement ayant une composition correspondant à un mélange de (i-a) un composé congruent ayant une composition correspondant à un mélange de (i-a-1) un composé stoechiométrique du type IV$_b$VI$_b$ composé de l'élément du groupe IV$_b$ choisi parmi Sn et Pb et de l'élément du VI$_b$ choisi parmi S, Se et Te et représenté par la formule chimique IV$_b$VI$_b$ et (i-a-2) un composé stoechiométrique du type V$_{b2}$VI$_{b3}$ composé de l'élément du groupe V$_b$ choisi parmi Sb, Bi et As et de l'élément du groupe VI$_b$ choisi parmi S, Se et Te et représenté par la formule chimique V$_{b2}$VI$_{b3}$ et (i-b) le composé stoechiométrique du type V$_{b2}$VI$_{b3}$ décrit ci-dessus, ladite composition contenant l'un au moins des éléments Se et Te ;

(ii) un matériau d'enregistrement ayant une composition correspondant à un mélange de (ii-a) un composé stoechiométrique du type I$_2$VI$_b$ composé de l'élément du groupe I choisi parmi Li, Na, K, Rb, Cs, Cu, Ag et Au et de l'élément du groupe VI$_b$ choisi parmi S, Se et Te et représenté par la formule chimique I$_2$VI$_b$ et (ii-b) un composé stoechiométrique composé d'éléments choisis parmi au moins deux groupes du groupe V$_b$ consistant en As, Sb et Bi et du groupe VI$_b$ consistant en S, Se et Te, ladite composition contenant l'un au moins des éléments Se et Te, dans lequel la phase cristalline dudit matériau d'enregistrement (ii) est une phase unique composée d'un composé stoechiométrique et ledit composé stoechiométrique est un composé congruent;

(iii) un matériau d'enregistrement ayant une composition correspondant à un mélange de (iii-a) un composé stoechiométrique du type III$_b$VI$_b$ composé de l'élément du groupe III$_b$ choisi parmi Ga, In et Tl et de l'élément du groupe VI$_b$ choisi parmi S, Se et Te et représenté par la formule chimique III$_b$VI$_b$ et (iii-b) un composé stoechiométrique composé d'éléments choisis parmi au moins deux groupes du groupe III$_b$ consistant en Ga, In et Tl, du groupe IV$_b$ consistant en Ge, Sn et Pb, du groupe V$_b$ consistant en As, Sb et Bi et du groupe VI$_b$ consistant en S, Se et Te, ladite composition contenant trois types d'éléments ou plus et contenant l'un au moins des éléments Se et Te, dans lequel la phase cristalline dudit matériau d'enregistrement (iii) est une phase unique composée d'un composé stoechiométrique et ledit composé stoechiométrique est un composé congruent;

(iv) un matériau d'enregistrement ayant une composition correspondant à un mélange de (iv-a) un composé stoechiométrique du type III$_{b2}$VI$_{b3}$ composé de l'élément du groupe III$_b$ choisi parmi Ga, In et Tl et de l'élément du groupe VI$_b$ choisi parmi S, Se et Te et représenté par la formule chimique III$_{b2}$VI$_{b3}$ et (iv-b) un composé stoechiométrique composé d'éléments choisis parmi au moins deux groupes du groupe III$_b$ consistant en Ga, In et Tl, du groupe IV$_b$ consistant en Ge, Sn et Pb et du groupe VI$_b$ consistant en S, Se et Te, ladite composition contenant trois types d'éléments ou plus et contenant l'un au moins des éléments Se et Te ;

(v-1) un matériau d'enregistrement fait d'une solution solide contenant quatre types d'éléments ou plus dont l'un au moins est Se ou Te et ayant une structure cristalline d'un composé stoechiométrique à trois éléments ayant une composition correspondant à un mélange de (v-1-a) un composé stoechiométrique du type IV$_b$VI$_b$ composé de l'élément du groupe IV$_b$ choisi parmi Sn et Pb et de l'élément du groupe VI$_b$ choisi parmi S, Se et Te et représenté par la formule chimique IV$_b$VI$_b$ et (v-1-b) un composé stoechiométrique du type V$_{b2}$VI$_{b3}$ composé de l'élément du groupe V$_b$ choisi parmi Sb, Bi et As et de l'élément du groupe VI$_b$ choisi parmi S, Se et Te et représenté par la formule chimique V$_{b2}$VI$_{b3}$, dans lequel l'un au moins des trois éléments constitutifs dudit composé stoechiométrique à trois éléments est partiellement remplacé par au moins un élément choisi parmi les éléments des groupes IV$_b$, V$_b$ et VI$_b$ décrits ci-dessus et Si et Ge du groupe IV$_b$ ;

(v-2) un matériau d'enregistrement fait d'une solution solide contenant quatre types d'éléments ou plus dont l'un au moins est Se ou Te et ayant une structure cristalline d'un composé stoechiométrique à trois éléments ayant une composition correspondant à un mélange de (v-2-a) un composé stoechiométrique du type I$_2$VI$_b$ composé de l'élément du groupe I choisi parmi Li, Na, K, Rb, Cs, Cu, Ag et Au et de l'élément du groupe VI$_b$ choisi parmi S, Se et Te et représenté par la formule chimique I$_2$VI$_b$ et (v-2-b) un composé stoechiométrique du type V$_{b2}$VI$_{b3}$ composé de l'élément du groupe V$_b$ choisi parmi As, Sb et Bi et de l'élément du groupe VI$_b$ choisi parmi S, Se et Te et représenté par la formule chimique V$_{b2}$VI$_{b3}$, dans lequel l'un au moins des trois éléments constitutifs dudit composé stoechiométrique à trois éléments est partiellement remplacé par au moins un élément choisi parmi les éléments des groupes I, V$_b$ et VI$_b$ décrits ci-dessus;

(v-3) un matériau d'enregistrement fait d'une solution solide contenant quatre types d'éléments ou plus dont l'un au moins est Se ou Te et ayant une structure cristalline d'un composé stoechiométrique à trois éléments ayant une composition correspondant à un mélange de (v-3-a) d'un composé stoechiométrique du type I$_2$VI$_b$ composé de l'élément du groupe I choisi parmi Li, Na, K, Rb, Cs, Cu, Ag et Au et de l'élément du groupe VI$_b$ choisi parmi S, Se et Te et représenté par la formule chimique I$_2$VI$_b$ et (v-3-b) un composé stoechiométrique du type IV$_b$VI$_{b2}$ composé de l'élément du groupe IV$_b$ choisi parmi Ge, Sn et Pb et de l'élément du groupe VI$_b$ choisi parmi S, Se et Te et représenté par la formule chimique IV$_b$VI$_{b2}$, dans lequel l'un au moins des trois éléments constitutifs dudit composé à trois éléments est partiellement remplacé par au moins un élément choisi parmi les éléments des groupes I, IV$_b$ et VI$_b$ décrits ci-dessus et Si du groupe IV$_b$ ;

(v-4) un matériau d'enregistrement fait d'une solution solide contenant quatre types d'éléments ou plus dont l'un au moins est Se ou Te et ayant une structure cristalline d'un composé stoechiométrique à trois éléments ayant une composition correspondant à un mélange de (v-4-a) d'un composé stoechiométrique du type III$_b$VI$_b$ composé de l'élément du groupe III$_b$ choisi parmi Ga, In et Tl et de l'élément du groupe VI$_b$ choisi parmi S, Se et Te et représenté par la formule chimique III$_b$VI$_b$ et (v-4-b) un composé stoechiométrique du type IV$_b$VI$_b$ composé de l'élément du groupe IV$_b$ choisi parmi Ge, Sn et Pb et de l'élément du groupe VI$_b$ choisi parmi S, Se et Te et représenté par la formule chimique IV$_b$VI$_b$, dans lequel l'un au moins des trois éléments constitutifs dudit composé à trois éléments est partiellement remplacé par au moins un élément choisi parmi les éléments des groupes III$_b$, IV$_b$ et V$_b$ décrits ci-dessus, Al du groupe III$_b$ et Si du groupe IV$_b$ ;

(v-5) un matériau d'enregistrement fait d'une solution solide contenant quatre types d'éléments ou plus dont l'un au moins est Se ou Te et ayant une structure cristalline d'un composé stoechiométrique à trois éléments ayant une composition correspondant à un mélange de (v-5-a) un composé stoechiométrique du type III$_b$VI$_b$ composé de l'élément du groupe III$_b$ choisi parmi Ga, In et Tl et de l'élément du groupe VI$_b$ choisi parmi S, Se et Te et représenté par la formule chimique III$_b$VI$_b$ et (v-5-b) un composé stoechiométrique du type IV$_b$VI$_{b2}$ composé de l'élément du groupe IV$_b$ choisi parmi Ge, Sn et Pb et de l'élément du groupe VI$_b$ choisi parmi S, Se et Te et représenté par la formule chimique IV$_b$VI$_{b2}$, dans lequel l'un au moins des trois éléments constitutifs dudit composé à trois éléments est partiellement remplacé par au moins un élément choisi parmi les éléments des groupes III$_b$, IV$_b$ et VI$_b$ décrits ci-dessus, Al du groupe III$_b$ et Si du groupe IV$_b$ ;

(v-6) un matériau d'enregistrement fait d'une solution solide contenant quatre types d'éléments ou plus dont l'un au moins est Se ou Te et ayant une structure cristalline d'un composé stoechiométrique à trois éléments ayant une composition correspondant à un mélange de deux types d'un composé stoechiométrique du type III$_b$VI$_b$ composé de l'élément du groupe III$_b$ choisi parmi Ga, In et Tl et de l'élément du groupe VI$_b$ choisi parmi S, Se et Te et représenté par la formule chimique III$_b$VI$_b$, dans lequel l'un au moins des trois éléments constitutifs dudit composé à trois éléments est partiellement remplacé par au moins un élément choisi parmi les éléments des groupes III$_b$ et VI$_b$ décrits ci-dessus et Al du groupe III$_b$ ;

(v-7) un matériau d'enregistrement fait d'une solution solide contenant quatre types d'éléments ou plus dont l'un au moins est Se ou Te et ayant une structure cristalline d'un composé stoechiométrique à trois éléments ayant une composition correspondant à un mélange de deux types d'un composé stoechiométrique du type III$_{b2}$VI$_{b3}$ composé de l'élément du groupe III$_b$ choisi parmi Ga, In et Tl et de l'élément du groupe $VI_b$ choisi parmi S, Se et Te et représenté par la formule chimique $III_{b2}VI_{b3}$, dans lequel l'un au moins des trois éléments constitutifs dudit composé à trois éléments est partiellement remplacé par au moins un élément choisi parmi les éléments des groupes $III_b$ et $VI_b$ décrits ci-dessus et Al du groupe $III_b$ ;

(v-8) un matériau d'enregistrement fait d'une solution solide contenant quatre types d'éléments ou plus dont l'un au moins est Se ou Te et ayant une structure cristalline d'un composé stoechiométrique à trois éléments ayant une composition correspondant à un mélange de (v-8-a) un composé stoechiométrique du type $III_{b2}VI_{b3}$ composé de l'élément du groupe $III_b$ choisi parmi Ga, In et Tl et de l'élément du groupe $VI_b$ choisi parmi S, Se et Te et représenté par la formule chimique $III_{b2}VI_{b3}$ et (v-8-b) un composé stoechiométrique du type $IV_bVI_b$ composé de l'élément du groupe $IV_b$ choisi parmi Ge, Sn et Pb et de l'élément du groupe $VI_b$ choisi parmi S, Se et Te et représenté par la formule chimique $IV_bVI_b$, dans lequel l'un au moins des trois éléments constitutifs dudit composé à trois éléments est partiellement remplacé par au moins un élément choisi parmi les éléments des groupes $III_b$, $IV_b$ et $VI_b$ décrits ci-dessus, Al du groupe $III_b$ et Si du groupe $IV_b$ ; et

(vi) un matériau d'enregistrement fait d'une solution solide composée d'au moins trois éléments choisis parmi l'élément du groupe $III_b$ choisi parmi Ga, In et Tl, l'élément du groupe $IV_b$ choisi parmi Ge, Sn et Pb, l'élément du groupe $V_b$ choisi parmi As, Sb et Bi et l'élément du groupe $VI_b$ choisi parmi S, Se et Te et contenant l'un au moins des éléments Se et Te, ladite solution solide étant synthétisée à partir de plusieurs éléments ou composés stoechiométriques ayant le même système cristallin, dans lequel ladite solution solide est une solution solide congruente.

2. Support d'enregistrement optique selon la revendication 1, dans lequel ledit matériau d'enregistrement est le matériau d'enregistrement (i).

3. Support d'enregistrement optique selon la revendication 2, dans lequel la phase cristalline dudit matériau d'enregistrement (i) est une phase unique composée d'un composé stoechiométrique.

4. Support d'enregistrement optique selon la revendication 3, dans lequel ledit composé stoechiométrique est un composé congruent.

5. Support d'enregistrement optique selon la revendication 1, dans lequel ledit composé stoechiométrique (ii-b) est un composé stoechiométrique du type $V_{b2}VI_{b3}$.

6. Support d'enregistrement optique selon la revendication 1, dans lequel ledit composé stoechiométrique multiple (ii-b) est un composé stoechiométrique du type $III_{b2}VI_{b3}$.

7. Support d'enregistrement optique selon la revendication 1, dans lequel ledit composé stoechiométrique multiple (ii-b) est un composé stoechiométrique du type $IV_bVI_{b2}$.

8. Support d'enregistrement optique selon la revendication 1, dans lequel ledit composé stoechiométrique (iii-b) est un composé stoechiométrique du type $IV_bVI_b$.

9. Support d'enregistrement optique selon la revendication 1, dans lequel ledit composé stoechiométrique (iii-b) est un composé stochiométrique du type $IV_bVI_{b2}$.

10. Support d'enregistrement optique selon la revendication 1, dans lequel ledit composé stoechiométrique (iii-b) est un composé stoechiométrique du type $III_bVI_b$.

11. Support d'enregistrement optique selon la revendication 1, dans lequel ledit matériau d'enregistrement est le matériau d'enregistrement (iv).

12. Support d'enregistrement optique selon la revendication 11, dans lequel ledit composé stoechiométrique (iv-b) est un composé stoechiométrique du type $III_{b2}VI_{b3}$.

13. Support d'enregistrement optique selon la revendication 11, dans lequel ledit composé stoechiométrique (iv-b) est un composé stoechiométrique du type $IV_bVI_b$.

14. Support d'enregistrement optique selon la revendication 1, dans lequel la phase cristalline du matériau d'enregistrement (iv) est une phase unique composée d'un composé stoechiométrique.

15. Support d'enregistrement optique selon la revendication 14, dans lequel ledit composé stoechiométrique est un composé congruent.

16. Support d'enregistrement optique selon la revendication 1, dans lequel ledit matériau d'enregistrement est le matériau d'enregistrement (v-1).

17. Support d'enregistrement optique selon la revendication 1, dans lequel ledit matériau d'enregistrement est le matériau d'enregistrement (v-2).

18. Support d'enregistrement optique selon la revendication 1, dans lequel ledit matériau d'enregistrement est le matériau d'enregistrement (v-3).

19. Support d'enregistrement optique selon la revendication 1, dans lequel ledit matériau d'enregistrement est le matériau d'enregistrement (v-4).

20. Support d'enregistrement optique selon la revendication 1, dans lequel ledit matériau d'enregistrement est le matériau d'enregistrement (v-5).

21. Support d'enregistrement optique selon la revendication 1, dans lequel ledit matériau d'enregistrement est le matériau d'enregistrement (v-6).

22. Support d'enregistrement optique selon la revendication 1, dans lequel ledit matériau d'enregistrement est le matériau d'enregistrement (v-7).

23. Support d'enregistrement optique selon la revendication 1, dans lequel ledit matériau d'enregistrement est le matériau d'enregistrement (v-8).

24. Support d'enregistrement optique selon les revendications 16 à 23, dans lequel l'un au moins des trois éléments constitutifs dudit composé stoechiométrique à trois éléments qui est partiellement remplacé et au moins un élément qui remplace ledit ou lesdits éléments constitutifs sont dans la relation mutuelle qu'ils peuvent former une solution solide quel que soit le rapport de mélange du premier élément au second élément.

25. Support d'enregistrement optique selon les revendications 19 à 23, dans lequel au moins un élément qui remplace au moins l'un des trois éléments constitutifs dudit composé stoechiométrique de trois éléments est Tl du groupe III$_b$.

26. Support d'enregistrement optique selon la revendication 1, dans lequel lesdits éléments ou composés stoechiométriques ayant le même système cristallin ont la même structure cristalline selon la classification par domaine de structure.

27. Support d'enregistrement optique selon la revendication 26, dans lequel ladite solution solide est une solution solide congruente.

Fig. 1

Fig. 7

Fig. 8

Fig. 9

## Fig. 14

Fig. 15

(s.s. : solid solution)

Fig. 16

Fig. 17

Fig. 18

Fig. 19

Fig. 20

Fig. 21

## Fig. 22

Fig. 23

Fig. 24

Fig. 25

Fig. 27

Fig. 28

(s.s. : solid solution)

Fig. 29

Fig. 30

Fig. 31

Fig. 32

Fig. 34

Fig. 35

## Fig. 36

Sample 55    Sample 54

Fig. 37

Fig. 38

Fig. 39

Fig. 40

Fig. 41